# EUROPEAN PATENT APPLICATION

(11) **EP 4 625 087 A1**
(43) Date of publication of application: **01.10.2025**
(21) Application number: 25161609.0
(22) Date of filing: 04.03.2025
(51) Int. Cl.: G05D 1/224, G05D 1/229, G05D 1/648, A01B 69/00

(54) **TRAVEL CONTROL METHOD FOR WORK VEHICLE, TRAVEL CONTROL PROGRAM, TRAVEL CONTROL SYSTEM, AND WORK VEHICLE**

(30) Priority: 25.03.2024 JP 2024047619
(71) Applicant: Yanmar Holdings Co., Ltd., Osaka-shi, Osaka (JP)
(72) Inventor: AKASE, Masaki, Osaka (JP); FUTAMATA, Shunsuke, Osaka (JP)
(74) Representative: Novagraaf International SA

(57) **Abstract**

[Problem] To provide a travel control method, a travel control program, a travel control system, and a work vehicle, capable of coping with a work site which is difficult for the work vehicle to turn in the periphery of a work area.

[Solution] A travel control method for the work vehicle 1 is to cause the work vehicle 1 to autonomously travel along a work route R1. The travel control method includes causing the work vehicle to perform a non-turning back-and-forth travel. In the non-turning back-and-forth travel, after the work vehicle 1 travels from a first end P31 toward a second end P32 of the work rote R13, the work vehicle 1 reverses a traveling direction without changing an orientation thereof on a second end P32 side and travels from the second end P32 toward the first end P31.

## Description

### TECHNICAL FIELD

The present disclosure relates to a travel control method for a work vehicle for controlling a travel of the work vehicle, a travel control program, a travel control system, and a work vehicle.

### BACKGROUND ART

Conventionally, as a related technique, a travel control system (autonomous travel system), which causes a work vehicle to autonomously travel along a target route at a work site, has been proposed (for example, see Patent Document 1). According to the travel control system of the related art, the work vehicle autonomously travels in a predetermined row order while performing predetermined work on objects to be worked which are arranged in a plurality of rows at a work site. The work vehicle performs the predetermined work such as a spraying work in which the work vehicle sprays a spraying material such as a liquid chemical or water on crops (the objects to be worked) planted in a field (the work site).

In the related art, a movement route (turning route) for moving between crops arranged in the plurality of rows is formed in a headland, and the work vehicle moves from a terminal end of a certain work route to a start end of the next work route through the movement route, thereby continuously traveling on a plurality of work routes. As a result, the work vehicle performs a back-and-forth travel between both ends of the field in an extending direction of the work route in a meandering manner in the field.

### PRIOR ART DOCUMENT

### PATENT DOCUMENT

Patent Document 1: Japanese Patent Laid-open Publication No. 2022-183962

### SUMMARY OF INVENTION

### TECHNICAL PROBLEM

In the above-mentioned related art, there is a possibility that the movement route cannot be generated when it is difficult for the work vehicle to be turned in the periphery (headland) of the work area in which the work route is formed, depending on a status of the field (work site) where the headland is narrow or there is no headland, for example.

An object of the present disclosure is to provide a travel control method for a work vehicle, a travel control program, a travel control system, and a work vehicle, which can cope with a work site where it is difficult for the work vehicle to turn in the periphery of a work area.

### SOLUTION TO PROBLEM

According to one aspect of the present disclosure, a travel control method for a work vehicle that causes the work vehicle to automatically travel along a work route, the travel control method includes causing the work vehicle to perform a non-turning back-and-forth travel in which after the work vehicle travels from a first end of the work route toward a second end of the work rote, the work vehicle reverses a traveling direction without changing an orientation of the work vehicle on the second end side of the work route and travels from the second end of the work route toward the first end of the work route.

According to another aspect of the present disclosure, a travel control program is a work vehicle control program that causes one or more processors to execute the travel control method mentioned above.

According to another aspect of the present disclosure, a travel control system includes a travel processor to cause a work vehicle to autonomously travel along a work route. In a preferable embodiment, the travel processor performs a non-turning back-and-forth travel in which after the work vehicle travels from a first end of the work route toward a second end of the work rote, the work vehicle reverses a traveling direction without changing an orientation of the work vehicle on the second end side of the work route and travels from the second end of the work route toward the first end of the work route.

According to still another aspect of the present disclosure, a work vehicle includes a travel control system mentioned above; and a traveler that is controlled by the travel control system.

### ADVANTAGEOUS EFFECTS OF INVENTION

According to the present disclosure, it is possible to provide a travel control method for a work vehicle, a travel control program, a travel control system, and a work vehicle, which can cope with a work field where it is difficult for the work vehicle to turn in the periphery of a work area.

### BRIEF DESCRIPTION OF DRAWINGS

FIG. 1 is a perspective view of a work vehicle according to a first embodiment as viewed from a left-front side,
FIG. 2 is a rear view of the work vehicle according to the first embodiment as viewed from the rear side,
FIG. 3 is an exemplary diagram illustrating crop rows in which the work vehicle according to the first embodiment is used,
FIG. 4 is a schematic view illustrating an overall configuration of an autonomous work system using the work vehicle according to the first embodiment,
FIG. 5 is a schematic block diagram illustrating a main configuration of the autonomous work system according to the first embodiment,
FIG. 6 is a left-side view of the work vehicle according to the first embodiment as viewed from the left side,
FIG. 7 is a right-side view of the work vehicle according to the first embodiment as viewed from the right side,
FIG. 8 is a plan view of the work vehicle according to the first embodiment as viewed from above,
FIG. 9 is a rear view of the work vehicle according to the first embodiment as viewed from the rear side,
FIG. 10 is a perspective view and a partially enlarged view of the work vehicle according to the first embodiment as viewed from an obliquely rear side,
FIG. 11 is a schematically explanatory view illustrating a movement of an autonomous travel of the work vehicle according to the first embodiment,
FIG. 12 is a schematically explanatory view for explaining, in particular, a non-turning back-and-forth travel operation during an autonomous travel of the work vehicle according to the first embodiment,
FIG. 13 is a schematically explanatory view for explaining, in particular, a non-turning back-and-forth travel operation during an autonomous travel of the work vehicle according to the first embodiment,
FIG. 14 is an exemplary graph showing a relationship between an inclined angle of the field and a shear stress in the autonomous travel of the work vehicle according to the first embodiment,
FIG. 15 is an exemplary graph showing a relationship between acceleration and the inclined angle of the field in the autonomous travel of the work vehicle according to the first embodiment,
FIG. 16 is a schematically explanatory diagram of an uphill travel operation in a steeply inclined field during the autonomous travel of the work vehicle according to the first embodiment,
FIG. 17 is a schematically exemplary diagram showing an acceleration adjustment screen displayed by a travel control system according to the first embodiment,
FIG. 18 is an exemplary graph showing a relationship between acceleration and the inclined angle of the field in the autonomous travel of the work vehicle according to the first embodiment,
FIG. 19 is a schematic view illustrating a return operation during the autonomous travel of the work vehicle according to the first embodiment,
FIG. 20 is a schematic view illustrating a return operation during the autonomous travel of the work vehicle according to the first embodiment,
FIG. 21 is a schematic view illustrating a return operation during the autonomous travel of the work vehicle according to the first embodiment,
FIG. 22 is a schematic view illustrating a return operation during the autonomous travel of the work vehicle according to the first embodiment,
FIG. 23 is a schematic diagram showing an example of a route display screen displayed by the travel control system according to the first embodiment,
FIG. 24 is a schematic diagram showing another example of the route display screen displayed by the travel control system according to the first embodiment,
FIG. 25 is a schematic diagram showing still another example of the route display screen displayed by the travel control system according to the first embodiment, and
FIG. 26 is a schematic diagram showing further still another example of the route display screen displayed by the travel control system according to the first embodiment.

### DESCRIPTION OF EMBODIMENTS

Now, embodiments of the present disclosure are described below with reference to drawings attached hereto. It should be noted that the following embodiments are merely examples embodying the present disclosure and are not intended to limit a technical scope of the present disclosure.

### First Embodiment

### 1. Overall Configuration

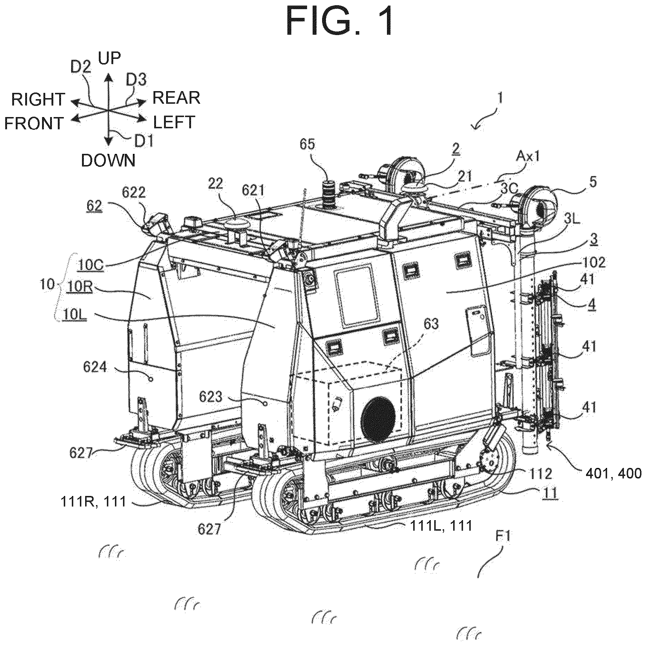

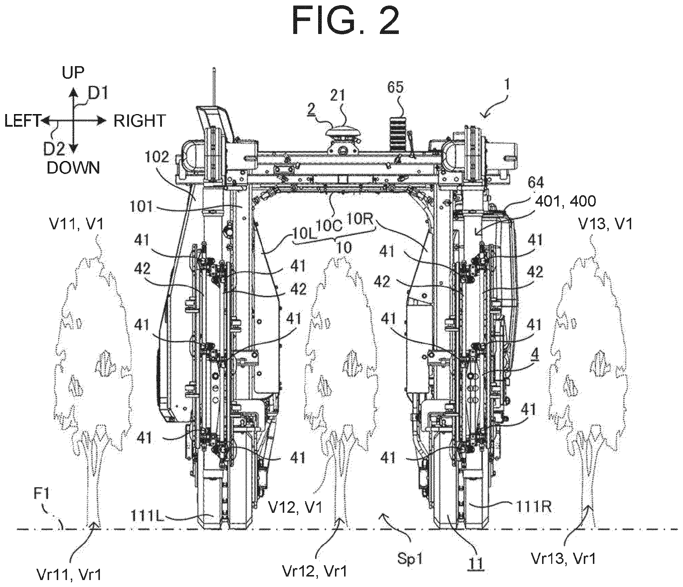

First, an overall configuration of a work vehicle 1 according to the present embodiment is described with reference to FIGS. 1 to 5. In the present embodiment, the work vehicle 1 performs on a crop V1 (see FIG. 2) grown in a field F1, for example, a spraying work to spray the spraying materials such as a liquid chemical, water or a fertilizer, or a weeding work to trim weeds around the crop V1. The work vehicle 1 performs various types of work while autonomously traveling according to a target route in a work site such as the field F1.

That is, the work vehicle 1 is configured to be able to perform the spraying work or weeding work as work. The work vehicle 1 is equipped with a work machine 400 which is detachable therefrom (a machine body 10 of the work vehicle 1), and work to be performed by the work vehicle 1 varies depending on the type of the work machine 400 with which the work vehicle 1 is equipped. In other words, the work vehicle 1 (the machine body 10 of the work vehicle 1) is equipped with the work machine 400 corresponding to the type of work to be performed by the work vehicle 1.

In the present embodiment, the work machine 400 mountable on the work vehicle 1 includes at least the sprayer 401. In addition, for example, the work machine 400 such as a weeding machine can be also mounted on the work vehicle 1. In a state where the sprayer 401 is mounted on the machine body 10 as the work machine 400, the work vehicle 1 can perform the spraying work. On the other hand, in a state where a weeder is mounted on the machine body 10 as the work machine 400, the work vehicle 1 can perform the weeding work.

In addition to the work vehicle which performs the spraying work or the weeding work, the term referred to as "work vehicle" in the present disclosure means work vehicles such as a tractor, a rice transplanter, a spreader, a seeder, a transplanter, and a combine, which perform various types of work. Furthermore, the term referred to as "work vehicle" in the present disclosure means not only an agricultural machine (agricultural machinery) but also a construction machine (construction machinery), for example.

In addition, the term referred to as "field" in the present disclosure means an example of a work site where the work vehicle 1 performs various types of work such as the spraying work while moving, and includes orchards, pastures, rice fields, crop fields, and the like where agricultural products are grown. In this case, the crop V1 grown in the field F1 is an agricultural product. Furthermore, in a case where a plant is grown in a planting field, the planting field is the field F1, and in a case where a tree to be a lumber for a forestry is grown in a forest, the forest is the field F1. In this case, the crop V1 grown in the field F1 is a plant, tree, or the like. However, the work site where the work vehicle 1 performs work is not limited to the field F1, and may be other than the field F1. For example, when the work vehicle 1 is the construction machine, the site where the construction machine performs work is the work site.

As an example according to the present embodiment, it is assumed that the work vehicle 1 performs work on the crop V1 grown in the field F1 while moving in the field F1 which is an orchard such as a grape orchard or an apple orchard. The crop V1 is an example of a work object on which the work vehicle 1 performs work such as the spraying work, and the crop is a grape tree, for example.

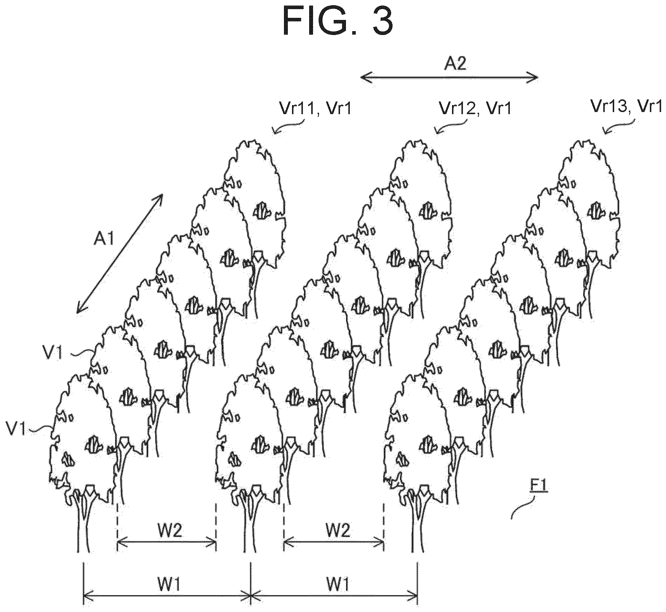

The crops V1 are arranged in a plurality of rows at predetermined intervals in the field F1. Specifically, as illustrated in FIG. 3, the plurality of crops V1 are planted linearly in a longitudinal direction A1 in a plan view. The plurality of crops V1 linearly arranged in the longitudinal direction A1 constitute a crop row Vr1. FIG. 3 illustrates three crop rows Vr1 each of which includes six crops V1 arranged in the longitudinal direction A1. The crop rows Vr1 are arranged at a predetermined distance W1 from each other in a lateral direction A2. Accordingly, a work passage, which has a width W2 (< W1) corresponding to the distance between the crop rows Vr1 adjacent to each other and extends along the longitudinal direction A1, is formed between the crop rows Vr1 adjacent to each other. The work vehicle 1 sprays the spraying materials (liquid chemical) to the crops V1 while moving (traveling) along the work passage in the longitudinal direction A1. The crop row Vr1 is consists of a plurality of crops V1 (work object) and is an example of work object rows plurally arranged in the field F1.

The work vehicle 1 sprays the liquid chemical to the crop V1 in a state where the sprayer 401 is mounted on the work vehicle 1 as the work machine 400. In this case, the liquid chemical is an example of the spraying materials, and the crop V1 to which the spraying materials (liquid chemical) is sprayed is an example of a spray object. As the spraying materials, the term referred to as "liquid chemical" in the present disclosure means an agricultural chemical which is used for an effective agriculture or an agricultural product preservation and includes herbicides, fungicides, antifungal agents, insecticides, rodenticides, growth promoters and germination inhibitors for the crop V1, and the like.

As described later in detail, the work vehicle 1 which travels in the field F1 has a gate-like shaped machine body 10. Specifically, the machine body 10 includes a first block 10L and a second block 10R which are arranged side by side in a right-left direction D2, and a connecting part 10C connecting an upper end portion of the first block 10L and an upper end portion of the second block 10R. Accordingly, the machine body 10 constitutes a gate-like shaped body which partitions off a space Sp1 by the first block 10L, the second block 10R, and the connecting part 10C on three sides, i.e., the left side, the right side, and the upper side, respectively. That is, the space Sp1, which is opened in a front-rear direction D3, is formed inside the machine body 10.

Furthermore, the work vehicle 1 is equipped with a traveler 11 having a pair of crawlers 111L and 111R arranged in the right-left direction D2. The pair of crawlers 111L and 111R is provided in a lower portion of the first block 10L and in a lower portion of the second block 10R, respectively, and is located on both ends of the space Sp1 in the right-left direction D2.

As shown in FIG. 2, the work vehicle 1 can perform work (spraying work and the like) on the crop Vr1 in a crop row Vr1 and another crops V1 in another crop rows Vr1 adjacent to the crop row Vr1 while traveling in a posture straddling one crop row Vr1 by the gate-like shaped machine body 10. In other words, the work vehicle 1 allows the crops V1 as work objects to pass through the space Sp1 inside the gate-like shaped machine body 10 while traveling. That is, as illustrated in FIG. 2, in a case where there are three crop rows Vr11, Vr12, and Vr13 as work object rows arranged in the right-left direction D2, the work vehicle 1 can travel with the machine body 10 straddling any one of crop row Vr1 of the three crop rows Vr11, Vr12, and Vr13.

Here, when the machine body 10 straddles a central crop row Vr12, the first block 10L moves on the work passage between a left crop row Vr11 and the central crop row Vr12, and the second block 10R moves on the work passage between the right crop row Vr13 and the central crop row Vr12. At this time, in a state where the sprayer 401 as the work machine 400 is mounted, the work vehicle 1 can simultaneously spray the spraying material (liquid chemical) to the crops V11 of the left crop row Vr11, the crops V12 of the central crop row Vr12, and the crops V13 of the left crop row Vr13. In this way, the work vehicle 1 according to the present embodiment can simultaneously spray the spraying material (liquid chemical) to the spray objects (the crops V1) in the three crop rows during traveling, whereby the spraying work of simultaneously spraying is more efficient than that of spraying the spraying material one row each.

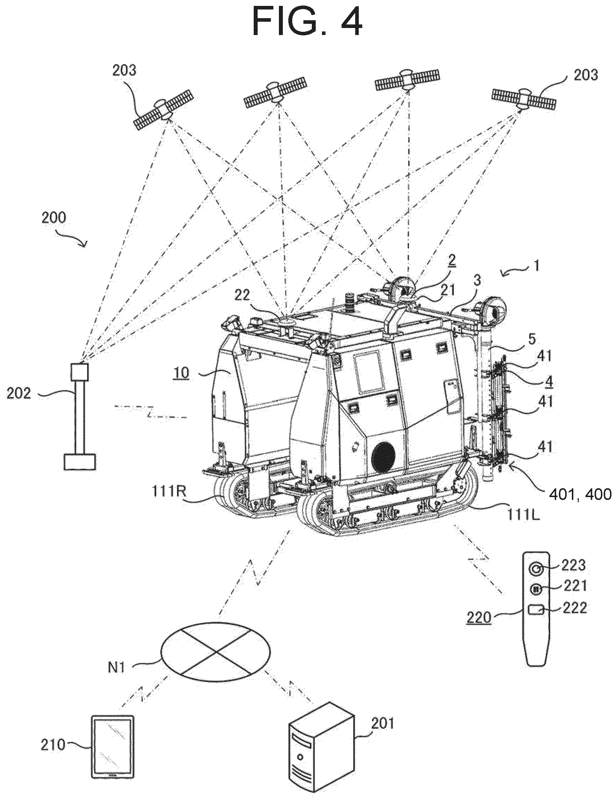

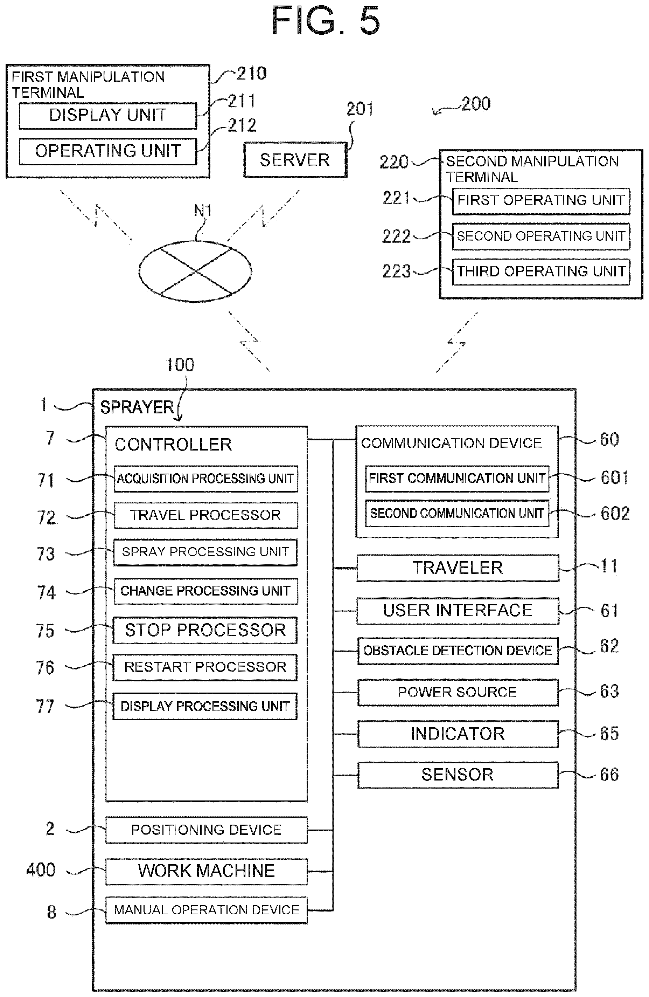

Furthermore, as an example according to the present embodiment, the work vehicle 1 is an unmanned vehicle which operates by autonomous driving without a manual operation (including a remote operation) by a person (operator). Therefore, as illustrated in FIGS. 4 and 5, the work vehicle 1 constitutes an autonomous work system 200 accompanied with a first operation terminal 210, a second operation terminal 220, a server 201, a base station 202, satellites 203, and the like. In other words, the autonomous work system 200 includes the work vehicle 1, the first operation terminal 210, the second operation terminal 220, the server 201, the base station 202, and the satellites 203. However, the autonomous work system 200 may not include at least one of the first operation terminal 210, the second operation terminal 220, the server 201, the base station 202, and the satellites 203 as constituent elements, and the autonomous work system 200 may not include the server 201, the base station 202, and the satellites 203, for example.

The work vehicle 1, the first operation terminal 210, the second operation terminal 220, and the server 201 are communicable with each other. The term referred to as "communicable" in the present disclosure means that information can be transmitted and received directly by an appropriate communication method such as wired communication or wireless communication (communication media is radio waves or light), or indirectly via a communication network (network) N1 or a relay. For example, the work vehicle 1 and the first operation terminal 210 are communicable with each other via the communication network N1 such as the Internet, a Local Area Network (LAN), a Wide Area Network (WAN), a public phone line, a cellular phone line network, a packet line network, or a wireless LAN. Here, the work vehicle 1 and the first operation terminal 210 are each wirelessly connected to the communication network N1. Therefore, the communication between the work vehicle 1 and the first operation terminal 210 includes at least wireless communication. **In** addition, each of the work vehicle 1 and the first operation terminal 210 is also wirelessly communicable with the server 201 via the communication network N1.

The satellites 203 are positioning satellites forming a satellite positioning system such as a Global Navigation Satellite System (GNSS) and transmits a GNSS signal (satellite signal). The base station 202 is a reference point (reference station) configuring the satellite positioning system. The base station 202 transmits to the work vehicle 1 a correction information for calculating a current position and the like of the work vehicle 1.

The work vehicle 1 according to the present embodiment includes a positioning device 2 which detects the current position (latitude, longitude, altitude, and the like), a current orientation, and the like of the machine body 10. The positioning device 2 executes a positioning process to specify (calculate) the current position, the current orientation, and the like of the machine body 10 by using the GNSS signal transmitted from the satellites 203. The positioning device 2 employs, for example, a relatively high-accurate positioning method such as Real Time Kinematic (RTK) positioning in which the position is performed based on the positioning information (GNSS signals or the like) received by two receivers (the base station 202 and an antenna 21) and a correction information generated by the base station 202.

The first operation terminal 210 is, for example, an operator portable general-purpose information processing device such as a smartphone or a tablet terminal. The first operation terminal 210 is configured to allow the work vehicle 1 to be remotely operated by issuing (transmitting) to the work vehicle 1 at least a stop instruction (temporary stop instruction) for stopping the autonomous travel of the work vehicle 1 in response to an operation of the operator. Here, the first operation terminal 210 wirelessly communicates with the work vehicle 1 via the communication network N1, and thus can control the work vehicle 1 even at a place far distant from the work vehicle 1, that is, at a remote location in the field F1, as long as it is possible to connect the first operation terminal 210 to (communicate with) the communication network N1.

As illustrated in FIG. 5, the first operation terminal 210 includes a display unit 211 which displays various types of information and an operating unit 212 which accepts the operation. The display unit 211 includes, for example, a liquid crystal display, an organic EL display, or the like. The operating unit 212 includes, for example, a touch panel, a physical switch, a mouse, a keyboard, and the like. As an example according to the present embodiment, the display unit 211 consisting of a liquid crystal display and the operating unit 212 consisting of a touch panel are integrated to constitute a touch panel display. Therefore, the operator is able to issue, for example, the stop instruction (temporary stop instruction) to the work vehicle 1 from the first operation terminal 210 by operating the operating unit 212 on an operation screen displayed on the display unit 211.

Furthermore, the first operation terminal 210 has a function to set (register) various types of information associated with control of the work vehicle 1, such as a target route for an autonomous travel of the work vehicle 1. That is, the operator is able to set the target route and the like by operating the operating unit 212 on the operation screen displayed on the display unit 211. The set information such as the target route is transmitted directly to the work vehicle 1 or indirectly via the server 201 or the like to the work vehicle 1, and is used for the autonomous travel of the work vehicle 1.

In addition, the first operation terminal 210 can display on the display unit 211 various types of information associated with an action of the work vehicle 1, such as the current position, the current orientation, and the work status of the work vehicle 1, during the autonomous travel of the work vehicle 1. As an example, the first operation terminal 210 displays on the display unit 211 a monitoring screen which displays the current position and the like of the work vehicle 1 together with the target route on a map which substantially represents the field F1, so that the operator is able to visually easily recognize the status of the work vehicle. Here, it is preferable that the monitoring screen also displays, for example, information such as the remaining amount of the liquid chemical as the spraying materials, the remaining amount of fuel, and the remaining amount of battery.

The second operation terminal 220 is a dedicated wireless communication terminal which is operator portable. The second operation terminal 220 is configured to allow the work vehicle 1 to be remotely operated by issuing (transmitting) to the work vehicle 1 at least the stop instruction (temporary stop instruction) for stopping the autonomous travel of the work vehicle 1 in response to an operation of the operator. Here, the second operation terminal 220 is configured to be communicable with the work vehicle 1 via a communication system different from the first operation terminal 210.

Specifically, the second operation terminal 220 communicates wirelessly directly with the work vehicle 1 not via the communication network N1, and thus the work vehicle 1 can be operated even at a position away from the work vehicle 1 as long as it is possible to connect the second operation terminal 220 to (communication with) the work vehicle 1. However, a range where the second operation terminal 220 can be connected to the work vehicle 1 is limited to, for example inside the field F1 or a periphery of the field F1, a shorter distance from the work vehicle 1 than that of the first operation terminal 210. Basically, therefore, the operator is able to control the work vehicle 1 by operating the second operation terminal 220 as long as it is possible for the operator to visually recognize the work vehicle 1.

As illustrated in FIGS. 4 and 5, the second operation terminal 220 includes a first operating unit 221, a second operating unit 222, and a third operating unit 223, each of which is individually acceptable the operation. Each of the first operating unit 221, the second operating unit 222, and the third operating unit 223 includes, for example, a physical switch, a touch panel, a mouse, or a keyboard. As an example according to the present embodiment, each of the first operating unit 221, the second operating unit 222, and the third operating unit 223 is configured by a momentary push button switch which is a physical switch (mechanical switch). Therefore, the operator operates individually each of the first operating unit 221, the second operating unit 222, and the third operating unit 223, and thus the operator is able to, for example, issue the stop instruction (a temporary stop instruction and an emergency stop instruction) to the work vehicle 1 from the second operation terminal 220.

Here, functions different from each other are assigned to the first operating unit 221, the second operating unit 222, and the third operating unit 223. Accordingly, the second operation terminal 220 issues (transmits) a different instruction to the work vehicle 1 depending on which of the first operating unit 221, the second operating unit 222, and the third operating unit 223 is pressed (operated) by the operator. Specifically, an instruction "temporary stop" is assigned to the first operating unit 221, an instruction "emergency stop" is assigned to the second operating unit 222, and an instruction "travel start" is assigned to the third operating unit 223. Therefore, for example, when the operator operates the first operating unit 221, the second operation terminal 220 issues the temporary stop instruction which is one kind of stop instructions for stopping the autonomous travel of the work vehicle 1.

In this way, according to the present embodiment, the work vehicle 1 is wirelessly communicable with a plural types of operation terminals including at least the first operation terminal 210 and the second operation terminal 220, and can be controlled in accordance with the instruction from each of the plural types of operation terminals. In other words, each of the first operation terminal 210 and the second operation terminal 220 constitutes a remote operation device (remote controller) capable of remotely operating the work vehicle 1, and the operator is able to stop the autonomous travel of the work vehicle 1 even at a place away from the work vehicle 1.

The server 201 is an information processing device such as a server device. The server 201 transmits to the work vehicle 1 information such as a target route along which the work vehicle 1 autonomously travels.

Furthermore, according to the present embodiment, for convenience of explanation, as shown in FIG. 1, a vertical direction in a state where the work vehicle 1 is feasible is defined as an up-down direction D1. Moreover, the right-left direction D2 and the front-rear direction D3 are defined on the basis of a direction viewed from the center point of the work vehicle 1 in a plan view. That is, the traveling direction of the work vehicle 1 when the work vehicle 1 moves forward is a front side in the front-rear direction D3, and the traveling direction of the work vehicle 1 when the work vehicle 1 moves rearward is a rear side in the front-rear direction D3. However, these definitions of directions are not intended to limit a direction of use (direction during use) of the work vehicle 1.

### 2. Details of Work Vehicle

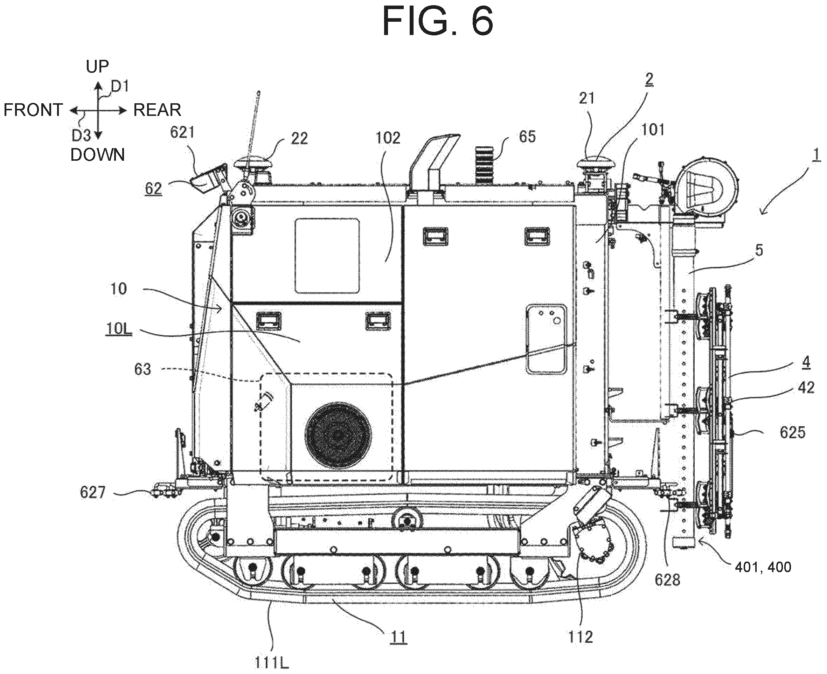

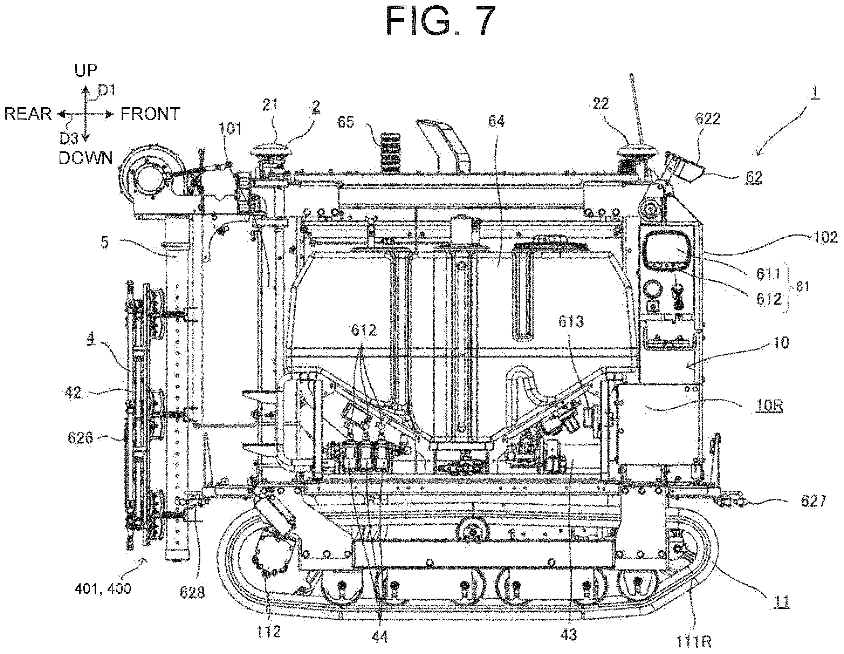

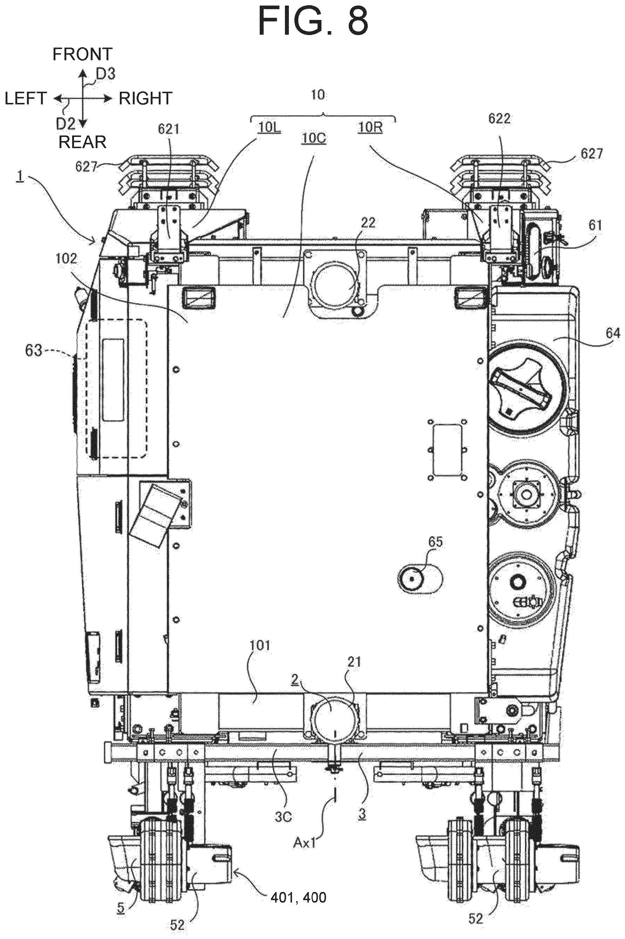

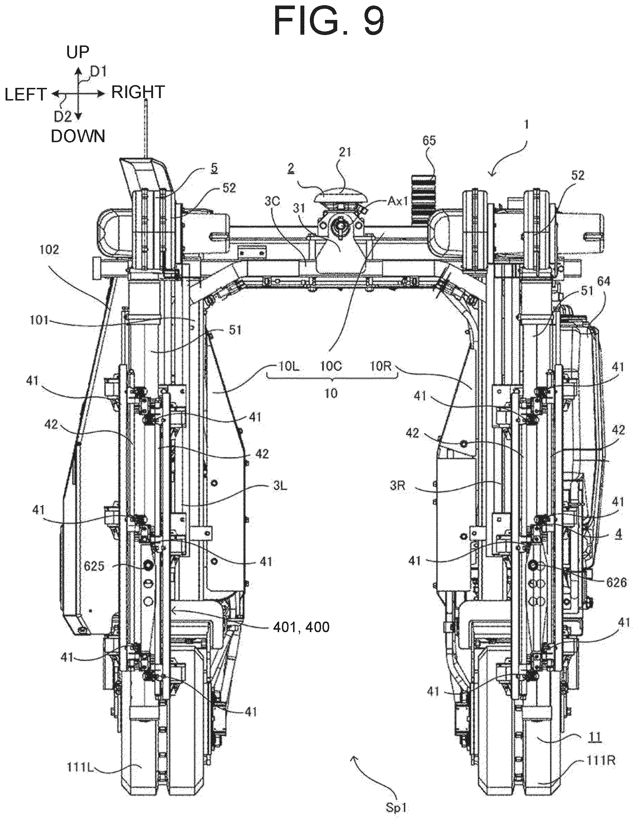

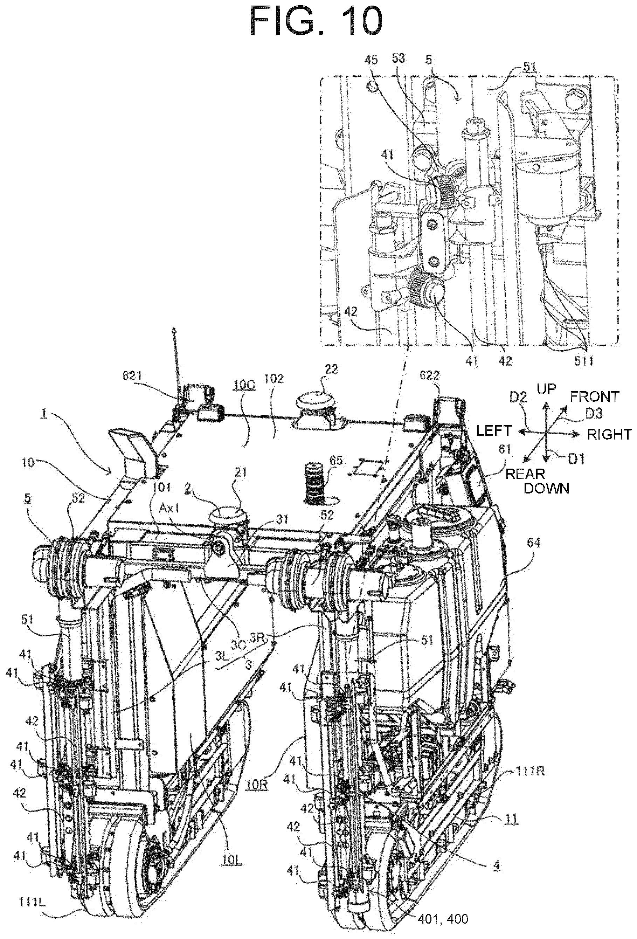

Next, the configuration of the work vehicle 1 is explained in more detail with reference to FIGS. 1, 2, and 5 to 10. FIG. 1 is a perspective external view of the work vehicle 1 as viewed from a left-front side, and FIG. 2 is a rear external view of the work vehicle 1 as viewed from a rear side (back side). FIG. 5 is a schematic block diagram illustrating a main configuration of the work vehicle 1. FIG. 6 is a left-side external view of the work vehicle 1 as viewed from a left side, FIG. 7 is a right-side external view of the work vehicle 1 as viewed from a right side, and FIG. 8 is a plan external view of the work vehicle 1 as viewed from above. FIG. 9 is a rear external view of the work vehicle 1 as viewed from the rear side (back side). FIG. 10 is a schematically perspective view of the work vehicle 1 as viewed from an obliquely-rear side, and shows a partially enlarged view in a one-dot chain line.

The work vehicle 1 includes the machine body 10, a traveler 11, a support frame 3, and the work machine 400. The work machine 400 is detachably mounted on the machine body 10, and thus detachably attached to the work vehicle 1. In the present embodiment, the work machine 400 which can be mounted to the machine body 10 includes at least the sprayer 401 as mentioned above. In the following, a description is given as an example in such a manner that the sprayer 401 is mounted on the machine body 10 as the work machine 400 and the work vehicle 1 performs the spraying work.

In the present embodiment, as illustrated in FIG. 5, the work vehicle 1 further includes a positioning device 2, a controller 7, a manual operation device 8, a communication device 60, a user interface 61, an obstacle detection device 62, a power source 63, a tank 64 (see FIG. 7), an indicator 65, a sensor 66, and the like. The work vehicle 1 further includes a fuel tank, a battery, and the like. In the present embodiment, structures of the work vehicle 1 such as the machine body 10 and the support frame 3 are basically made of metal, and the material of the structures is selectable according to a required strength, weather resistance, and the like. However, the material of the structures of the work vehicle 1 is not limited to metal, and may be appropriately resin, wood, or the like, for example.

### 2.1 Specific Configuration Other Than Work Machine

First, a specific configuration of the work vehicle 1 other than the work machine 400 is described.

The machine body 10 is a main body of the work vehicle 1 and supports most of components of the work vehicle 1 such as the positioning device 2 and the support frame 3. The machine body 10 includes a frame 101 (see FIG. 2) and a cover 102. The frame 101 is a member configuring a skeleton of the machine body 10 and supports heavy stuff such as the power source 63 and the tank 64. The cover 102 is a member configuring an outer shell of the machine body 10 and is attached to the frame 101 so as to cover at least a part of the frame 101 and members mounted on the frame 101. The frame 101 at a part of the rear side (back side) and the right side of the machine body 10 is not covered with the cover 102, thereby being exposed. The cover 102 is divided into a plurality of portions, and the plurality of portions are configured to be individually detachable from the frame 101. Therefore, for example, it is possible to remove only a portion of the cover 102 corresponding to a part of the devices (members) such as the power source 63, whereby the part of the devices (members) such as the power source 63 can be exposed.

As mentioned above, the machine body 10 includes the first block 10L and the second block 10R arranged side by side in the right-left direction D2. The first block 10L and the second block 10R are opposed to each other in the right-left direction D2 with being spaced at a predetermined distance or more apart from each other. As an example according to the present embodiment, the first block 10L is located on the left side, and the second block 10R is located on the right side. Therefore, the left side portion of the machine body 10 is constituted by the first block 10L, and the right side portion of the machine body 10 is constituted by the second block 10R. Furthermore, the machine body 10 includes a connecting part 10C which connects the first block 10L and the second block 10R. In a front view (as viewed from the front), the connecting part 10C has a length along the right-left direction D2, and the first block 10L and the second block 10R each have a length along the up-down direction D1.

Here, the connecting part 10C connects the upper end portion of the first block 10L and the upper end portion of the second block 10R. In other words, the first block 10L and the second block 10R each protrude downward from both end portions of the connecting part 10C (in the right-left direction D2). Consequently, the machine body 10 forms a gate-like shaped body, which is opened in the downward direction as well as in the front-rear direction D3, with the first block 10L, the second block 10R, and the connecting part 10C. Furthermore, the space Sp1, which is surrounded on three sides by the first block 10L, the second block 10R, and the connecting part 10C and is opened in the front-rear direction D3, is formed inside the machine body 10.

In short, as shown in FIG. 2, the machine body 10 forms the space Sp1 through which the crop V1 (work object) passes between the first block 10L and the second block 10R, which is a target of the work (spraying work) by the work machine 400 (here, the sprayer 401). Specifically, the dimensions of each part of the machine body 10 are set so that the space Sp1, which has a height and a width equal to or larger than a standard size of the crop V1 which is a spray object as a reference, is formed. Accordingly, when the crop V1 has the standard size, the machine body 10 allows the crop V1 to pass through the space Sp1 with straddling the crop V1 and with a predetermined value or more spacing provided so that the crop V1 does not get into contact with the machine body 10. During the time when the crop V1 passes through the space Sp1, the first block 10L is located on the left side of the crop V1, the second block 10R is located on the right side of the crop V1, and the connecting part 10C is located above the crop V1.

More specifically, in the present embodiment, the machine body 10 is configured to be substantially symmetrical in the right-left direction D2. In a side view, the first block 10L and the second block 10R are formed as a rectangle having substantially the same size and the same shape. The first block 10L and the second block 10R each have a flat shape whose dimension in the right-left direction D2 is the smallest among the dimension of the up-down direction D1, the dimension of the right-left direction D2, and the dimension of the front-rear direction D3. Furthermore, the first block 10L and the second block 10R are each formed in a tapered shape in which the dimension in the right-left direction D2 at a portion above a central portion in the up-down direction D1 decreases toward the upper end in the up-down direction D1. The connecting part 10C is formed as a rectangle such that the dimension in the front-rear direction D3 is larger than that in the right-left direction D2 in a plan view. The connecting part 10C has a flat shape whose dimension in the up-down direction D1 is the smallest among the dimension of the up-down direction D1, the dimension of the right-left direction D2, and the dimension of the front-rear direction D3.

In this way, the machine body 10 can be roughly divided into three portions (blocks), i.e., the first block 10L, the second block 10R, and the connecting part 10C. The first block 10L, the second block 10R, and the connecting part 10C each include the frame 101 and the cover 102. In other words, the first block 10L and the second block 10R each include the frame 101 and the cover 102. In addition, most of the components of the work vehicle 1 such as the positioning device 2 and the support frame 3 are provided dispersedly in the first block 10L, the second block 10R, and the connecting part 10C.

The traveler 11 is a traveling device (vehicle body) which causes the work vehicle 1 to travel and is provided on the lower side of the machine body 10. The traveler 11 allows the machine body 10 to travel (and turn) on the ground and to move in the right-left direction D2 and the front-rear direction D3 within the field F1. Such the traveler 11 is provided in the machine body 10, whereby the work vehicle 1 can perform work while moving in the field F1.

The traveler 11 includes a pair of crawlers (crawler belts) 111L and 111R arranged in the right-left direction D2 (see FIG. 1). The pair of crawlers 111L and 111R is arranged at a constant spacing in the right-left direction D2, and the space Sp1 which allows the crop V1 which is a work object to pass through is formed between the pair of crawlers 111L and 111R. That is, the left crawler 111L located on the left side of the space Sp1 and the right crawler 111R located on the right side of the space Sp1 are opposed to each other across the space Sp1. In a case where the left crawler 111L and the right crawler 111R are not distinguished from each other, each of the left crawler 111L and the right crawler 111R may be simply referred to as "crawler 111", hereinafter. In addition, the traveler 11 includes a motor 112 (see FIG. 1) which drives the crawler 111. That is, the traveler 11 is a crawler-type (endless track-type) traveling device which causes the work vehicle 1 to travel by driving an endless belt-like crawler 111 by the motor 112.

Here, at least two motors 112 are provided corresponding to the pair of crawlers 111L and 111R. A left motor 112 which drives the left crawler 111L and a right motor 112 which drives the right crawler 111R can individually drive the crawlers 111. As an example according to the present embodiment, the motor 112 is a hydraulic motor (hydraulic actuator) and drives the crawler 111 with hydraulic oil supplied from a hydraulic pump. According to this configuration, even on the road in the field F1 with a rough surface condition, the machine body 10 can travel in a relatively stable manner.

Here, the crawler 111 and the motor 112 are provided on the lower side of each of the first block 10L and the second block 10R. That is, the first block 10L includes the left crawler 111L and the motor 112 which drives the left crawler 111L, and the second block 10R includes the right crawler 111R and the motor 112 which drives the right crawler 111R. In the present embodiment, the pair of crawlers 111L and 111R and the pair of motors 112 are arranged to be substantially symmetrical in the right-left direction D2. In this way, a pair of travelers 11 is arranged to be separated from each other in the right-left direction D2 by the space Sp1, whereby the work vehicle 1 can travel in a relatively stable posture on the road in the field F1 with various surface conditions including a laterally inclined slope or the like in which the work vehicle 1 inclines to an either side in the right-left direction D2.

Here, the pair of crawlers 111L and 111R is driven with power from the power source 63 in a state where independent speed change by a hydrostatic continuously variable transmission is possible. Accordingly, if the pair of crawlers 111L and 111R is driven at an equal speed in a forward direction, the machine body 10 can put into a forward travel state in which the machine body 10 travels straight in the forward direction, and if the pair of crawlers 111L and 111R is driven at an equal speed in a backward direction, the machine body 10 can put into a backward travel state in which the machine body 10 travels straight in the backward direction. Furthermore, if the pair of crawlers 111L and 111R is driven at an unequal speed in the forward direction, the machine body 10 can put into a forward turning state in which the machine body 10 turns while moving forward, and if the pair of crawlers 111L and 111R is driven at an unequal speed in the backward direction, the machine body 10 can put into a backward turning state in which the machine body 10 turns while moving backward. Moreover, if one of the pair of crawlers 111L and 111R is driven while the other of the pair of crawlers 111L and 111R is stopped, the machine body 10 can put into a pivot turn (skid turn) state, and if the pair of crawlers 111L and 111R is driven reversely to each other at an equal speed in the forward direction and the backward direction, the machine body 10 can put into a spin turn (neutral turn) state. If the pair of crawlers 111L and 111R is stopped, the machine body 10 can put into a traveling stopped state.

The power source 63 and the like are mounted on the first block 10L, and the tank 64 and the like are mounted on the second block 10R. In this way, the components of the work vehicle 1 are arranged dispersedly on the first block 10L and the second block 10R of the machine body 10, whereby the work vehicle 1 can be balanced in the right-left direction D2 and have a low center of gravity. As a result, the work vehicle 1 can stably travel on the slope or the like of the field F1.

As mentioned above, the positioning device 2 is a device which detects the current position, the current orientation, and the like of the machine body 10. The positioning device 2 includes at least the antenna 21. The antenna 21 receives a GNSS signal or the like transmitted from the satellites 203. That is, the antenna 21 includes a position specifying antenna to specify the position of the machine body 10. Here, the antenna 21 is disposed on the upper surface (top surface) of the machine body 10 to easily receive signals (GNSS signals) from the satellites 203. In other words, the antenna 21 is disposed at a position higher than the highest position of the machine body 10. Furthermore, the positioning device 2 includes a posture detection unit which detects a posture of the machine body 10, and the like.

In the present embodiment, the positioning device 2 further includes an antenna 22 which is a second antenna, other than the antenna 21 which is a first antenna. The positioning device 2 receives GNSS signals or the like by each of the two antennas 21 and 22. Here, the antenna 22 (the second antenna) and the antenna 21 (the first antenna) are disposed aligned with the front-rear direction D3. Consequently, the positioning device 2 can transmit and receive signals (GNSS signals or the like) by each of the antennas 21 and 22. In particular, when the antennas 21 and 22 are the position specifying antennas, the current position can be specified in each of a front portion and a rear portion of the machine body 10, and thus the orientation (current orientation) of the machine body 10 can also be collectively specified.

The support frame 3 is a member which is attached to one end portion of the machine body 10 in the front-rear direction D3 and supports the work machine 400 (the sprayer 401 or the weeder 402). In the present embodiment, the support frame 3 is attached to a rear end portion of the machine body 10. The support frame 3 has a gate-like shape similar to the machine body 10 and is provided at a position where the support frame 3 overlaps with the machine body 10 in a rear view (as viewed from the rear side). The support frame 3 includes a vertical frame 3L (first vertical frame) and a vertical frame 3R (second vertical frame) which are arranged aligned with the right-left direction D2 and a horizontal frame 3C which connects an upper end portion of the vertical frame 3L and an upper end portion of the vertical frame 3R. Consequently, the support frame 3 forms a gate-like shaped frame which surrounds three sides, i.e., a left side, a right side, and an upper side of the space Sp1 with the vertical frame 3L, the vertical frame 3R, and the horizontal frame 3C.

Specifically, the support frame 3 includes the vertical frame 3L and the vertical frame 3R arranged aligned with the right-left direction D2. The vertical frame 3L and the vertical frame 3R are opposed to each other in the right-left direction D2 with being spaced at a predetermined distance or more apart from each other. As an example according to the present embodiment, the vertical frame 3L is located on the left side, and the vertical frame 3R is located on the right side. Accordingly, the vertical frame 3L is located in the rear of the first block 10L of the machine body 10, and the vertical frame 3R is located in the rear of the second block 10R of the machine body 10. In a rear view (as viewed from the rear side), the horizontal frame 3C has a length along the right-left direction D2, and the vertical frame 3L and the vertical frame 3R each have a length along the up-down direction D1.

Here, the horizontal frame 3C connects the upper end portion of the vertical frame 3L and the upper end portion of the vertical frame 3R. In other words, the vertical frame 3L and the vertical frame 3R each protrude downward from both end portions of the horizontal frame 3C (in the right-left direction D2). In this way, the support frame 3 includes the horizontal frame 3C having a length along the right-left direction D2 and the pair of vertical frames 3L and 3R which each have a length along the up-down direction D1 and protrude downward from both end portions of the horizontal frame 3C. Consequently, the support frame 3 forms a gate-like shaped frame, which is opened in the downward direction as well as in the front-rear direction D3, with the vertical frame 3L, the vertical frame 3R, and the horizontal frame 3C. Furthermore, the space Sp1, which is surrounded on three sides by the vertical frame 3L, the vertical frame 3R, and the horizontal frame 3C and is opened in the front-rear direction D3, is formed inside the support frame 3.

In short, the support frame 3 forms the space Sp1 through which the crop V1 (work object) passes between the pair of vertical frames 3L and 3R, which is a target of the work. Specifically, the dimensions of each part of the support frame 3 are set so that the space Sp1, which has a height and a width equal to or larger than a standard size of the crop V1 which is the work object as a reference, is formed. Accordingly, when the crop V1 has the standard size, the support frame 3 allows the crop V1 to pass through the space Sp1 with straddling the crop V1 and with a predetermined value or more spacing provided so that the crop V1 does not get into contact with the support frame 3. When the crop V1 passes through the space Sp1, the vertical frame 3L is located on the left side of the crop V1, the vertical frame 3R is located on the right side of the crop V1, and the horizontal frame 3C is located above the crop V1.

More specifically, in the present embodiment, the support frame 3 is configured to be substantially symmetrical in the right-left direction D2. The vertical frame 3L and the vertical frame 3R each have a cylindrical shape with a circular cross section. As an example according to the present embodiment, the vertical frame 3L and the vertical frame 3R are configured such that two cylindrical members are arranged in parallel, respectively. The horizontal frame 3C has a square tubular shape with a rectangular cross section. Here, the vertical frame 3L and the vertical frame 3R are each firmly fixed to the horizontal frame 3C by an appropriate fixing means such as a connecting fitting, a brace fitting, or welding. Therefore, the vertical frame 3L and the vertical frame 3R each maintain an orthogonal relationship with respect to the horizontal frame 3C. In other words, in a rear view, an angle of a corner portion between the vertical frame 3L and the horizontal frame 3C and an angle of a corner portion between the vertical frame 3R and the horizontal frame 3C are a right angle.

**In** the present embodiment, the support frame 3 is supported by the machine body 10 so as to be rotatable about a rotation axis Ax1 (see FIGS. 8 and 9) while maintaining a relative positional relationship between the pair of vertical frames 3L and 3R and the horizontal frame 3C. The rotation axis Ax1 is an axis which passes through a fulcrum portion 31 provided on the horizontal frame 3C and is along the front-rear direction D3. That is, the support frame 3 which supports the work machine 400 is supported by the machine body 10 so as to be rotatable about the rotation axis Ax1 along the front-rear direction D3. Here, the term referred to as "rotation axis" in the present disclosure means a virtual axis (straight line) which is the center of a rotational motion of a rotor. That is, the rotation axis Ax1 is an unsubstantial virtual axis. However, the rotation axis Ax1 may be a substantial member, such as a shaft pin.

As illustrated in FIG. 5, the communication device 60 includes a first communication unit 601 and a second communication unit 602. The first communication unit 601 and the second communication unit 602 are communication interfaces which can operate separately and perform data communications with external devices such as the server 201, the first operation terminal 210, and the second operation terminal 220 in accordance with a predetermined communication protocols different from each other. That is, the communication device 60 is configured to perform communications in a plurality of communication channels (frequency bands or the like) including a communication by the first communication unit 601 and a communication by the second communication unit 602.

The user interface 61 is a device which performs at least one of outputting information to a user and accepting an operation from the user. Here, as shown in FIG. 7, the user interface 61 includes a display unit 611 such as a liquid crystal display or an organic EL display which displays various types of information and an operating unit 612 such as a touch panel, a knob, or a push button switch which accepts an operation from the user. An operator, which is an example of the user, can perform various settings by operating the operating unit 612 in accordance with contents on an operation screen displayed on the display unit 611. Specifically, the operator operates the operating unit 612 of the user interface 61 to set action conditions and the like of the work machine 400. Examples of the action conditions of the work machine 400 include a pressure (injection pressure), a flow rate, and the like when a spraying material is sprayed from a spray nozzle 41 of the sprayer 401.

The obstacle detection device 62 includes a first detection unit 621 and a second detection unit 622. The first detection unit 621 and the second detection unit 622 are both arranged so as to face the forward direction of the machine body 10. The first detection unit 621 is provided at a left-front end of the upper surface of the machine body 10, and the second detection unit 622 is provided at a right-front end of the upper surface of the machine body 10. That is, the obstacle detection device 62 includes a plurality of detection units (the first detection unit 621 and the second detection unit 622) which are mounted on the machine body 10 of the work vehicle 1 and are arranged so as to be spaced apart from each other in the widthwise direction (the right-left direction D2) orthogonal to the traveling direction (the front-rear direction D3) of the work vehicle 1 in a plan view.

Each of the first detector 621 and the second detector 622 includes, for example, a sensor such as a Light Detection and Ranging (LiDAR) to detect a peripheral situation of the machine body 10. As an example according to the present embodiment, each of the first detection unit 621 and the second detection unit 622 is a three-dimensional sensor which measures a distance to each distance measurement point (measurement object) within a measurement range by a Time of Flight (TOF) method of measuring a distance to a distance measurement point based on a round-trip time of light or sound from a time when reaching the distance measurement point to a time when returning back from the distance measurement point. The peripheral situation of the machine body 10 includes, for example, presence or absence of an object (obstacle or the like) forward in the traveling direction of the machine body 10, the position (distance and orientation) of the object, and the like.

In addition, the obstacle detection device 62 further includes a first sensor 623 (see FIG. 1), a second sensor 624 (see FIG. 1), a third sensor 625 (see FIG. 6), and a fourth sensor 626 (see FIG. 7). The first sensor 623 and the second sensor 624 are both arranged so as to face the forward direction of the machine body 10, and the third sensor 625 and the fourth sensor 626 are both arranged face the rearward direction of the machine body 10. The first sensor 623 is provided on the front surface of the first block 10L, and the second sensor 624 is provided on the front surface of the second block 10R. The third sensor 625 is attached to the vertical frame 3L, and the fourth sensor 626 is attached to the vertical frame 3R.

Each of the first, second, third and fourth sensors 623 to 626 includes, for example, a sensor such as a sonar sensor, a radar, or LiDAR, and detects the peripheral situation of the machine body 10. As an example according to the present embodiment, each of the first, second, third and fourth sensors 623 to 626 is a three-dimensional sensor which measures a distance to each distance measurement point (measurement object) within a measurement range by a Time of Flight (TOF) method of measuring a distance to a distance measurement point based on a round-trip time of light or sound from a time when reaching the distance measurement point to a time when returning back from the distance measurement point. The peripheral situation of the machine body 10 includes, for example, presence or absence of an object (obstacle or the like) forward in the traveling direction of the machine body 10, the position (distance and orientation) of the object, and the like.

The obstacle detection device 62 further includes a front contact sensor 627 and a rear contact sensor 628. A pair of right and left front contact sensors 627 is arranged on the front side of the machine body 10, and a pair of right and left rear contact sensors 628 is arranged on the rear side of the machine body 10. The front contact sensor 627 and the rear contact sensor 628 each detect an obstacle when the obstacle gets into contact therewith. The front contact sensor 627 and the rear contact sensor 628 each transmit a detection signal to the controller 7 when the obstacle is detected.

The power source 63 is a drive source which supplies power to at least the traveler 11. The power source 63 includes, for example, an engine such as a diesel engine. The power source 63 drives the traveler 11 and the like by driving the hydraulic pump to cause the hydraulic pump to supply the hydraulic oil to the motor 112 and the like of the traveler 11. Electronic devices such as the positioning device 2, the controller 7, and the communication device 60 are connected to a battery and can operate even when the power source 63 is turned off.

The tank 64 stores a spraying material such as liquid chemical. The spraying material stored in the tank 64 is supplied to the sprayer 401 and is sprayed from the spray nozzle 41 of the sprayer 401. The tank 64 can be refilled with the liquid chemical which is the spraying material from the outside. The volume of the tank 64 is, for example, about 200 liter.

The indicator 65 is provided on the upper surface of the machine body 10. The indicator 65 is formed in a cylindrical shape having a length in the up-down direction D1, for example. The lighting state of the indicator 65 changes in accordance with the operation state of the work vehicle 1 (traveling state, performing state of the spraying work, and the like). Consequently, the operation state of the work vehicle 1 can be visually recognized even from an area surrounding the work vehicle 1.

The sensor 66 includes, for example, an Inertial Measurement Unit (IMU) and the like which detects the posture of the machine body 10. The inertial measurement unit includes an inertial sensor such as an angular velocity sensor and an acceleration sensor, and is mounted on the machine body 10 to detect the posture (inclination or the like) of the machine body 10.

In addition, the sensor 66 includes, for example, a remaining amount sensor which detects the remaining amount of the liquid chemical as the spraying material and a remaining amount of the fuel. As an example, the sensor 66 detects the remaining amount of liquid chemical from the amount of liquid chemical in the tank 64. Similarly, the sensor 66 detects the remaining amount of fuel from the amount of fuel in the fuel tank.

The controller 7 includes, as a main configuration, for example, a computer system including one or more processors such as a Central Processing Unit (CPU) and one or more memories such as a Read Only Memory (ROM) and a Random Access Memory (RAM), and executes various types of processes (information processing). In the present embodiment, the controller 7 is an integrated controller which performs overall control of the work vehicle 1 and includes an Electronic Control Unit (ECU), for example. However, the controller 7 may be provided separately from the integrated controller or may include one processor or a plurality of processors as a main configuration.

As shown in FIG. 5, the controller 7 includes an acquisition processing unit 71, a travel processor 72, a spray processing unit 73, a change processing unit 74, a stop processor 75, a restart processor 76, and a display processing unit 77. As an example according to the present embodiment, since the controller 7 includes a computer system including one or more processors as a main configuration, the plurality of functional units (the acquisition processing unit 71 and the like) are realized by one or more processors executing a control program. The plurality of functional units included in the controller 7 may be provided in a plurality of housings dispersedly or may be provided in a single housing.

The controller 7 is configured to be communicable with devices provided in each units of the machine body 10. That is, the controller 7 is connected to at least the traveler 11, the positioning device 2, the work machine 400 (the sprayer 401 or the weeder 402), the communication device 60, the user interface 61, the obstacle detection device 62, the power source 63, and the indicator 65. This allows the controller 7 to control the traveler 11, the work machine 400, and the like, and to acquire electric signals from the positioning device 2, the communication device 60, the obstacle detection device 62, and the like. The controller 7 may transmit and receive various types of information (data) to and from each of devices, directly or indirectly via a relay or the like.

Specifically, the controller 7 can communicate with, for example, the first operation terminal 210 via the communication device 60. This allows the controller 7 to cause the display unit 211 of the first operation terminal 210 to display various types of information and to accept operation information of the operating unit 212 of the first operation terminal 210. That is, the controller 7 has at least a function as a display control unit which causes the display unit 211 of the first operation terminal 210 to display a display screen.

**In** addition to the above-mentioned functional units, the controller 7 further includes an engine control unit, a Hydro-Static Transmission (HST) control unit which performs control associated with a hydrostatic continuously variable transmission, and the like. The engine control unit performs control associated with the engine (the power source 63). The HST control unit performs control associated with the hydrostatic continuously variable transmission.

The acquisition processing unit 71 executes an acquisition process to acquire an electric signal (including data) from each of devices. **In** the present embodiment, the acquisition processing unit 71 periodically or non-periodically acquires the output from each of sensors of the obstacle detection device 62, the posture of the machine body 10 from the sensor 66, information (data) such as the remaining amount of the liquid chemical as the spraying material and the remaining amount of the fuel, and the like. The acquisition processing unit 71 may acquire various types of data from various sensors or the like directly or indirectly via an electronic control unit or the like. The data acquired by the acquisition processing unit 71 is stored in a memory or the like, for example.

The travel processor 72 performs an autonomous travel process to cause the machine body 10 to autonomously travel along a target route in the field F1 based on the positioning information or the like acquired from the positioning device 2. Specifically, the travel processor 72 causes the traveler 11 to autonomously travel along the target route based on the positioning information including the position and orientation of the machine body 10 measured by the positioning device 2. For example, when the positioning information is ready for the RTK positioning and the operator operates (for example, presses and holds) the third operating unit 223 of the second operation terminal 220, the second operation terminal 220 issues a travel start instruction (work start instruction) to the work vehicle 1. When the travel start instruction is acquired from the second operation terminal 220, the travel processor 72 causes the work vehicle 1 to start autonomously traveling based on the positioning information of the machine body 10 positioned by the positioning device 2. Thereby, the work vehicle 1 starts autonomously traveling along the target route and starts working by the work machine 400.

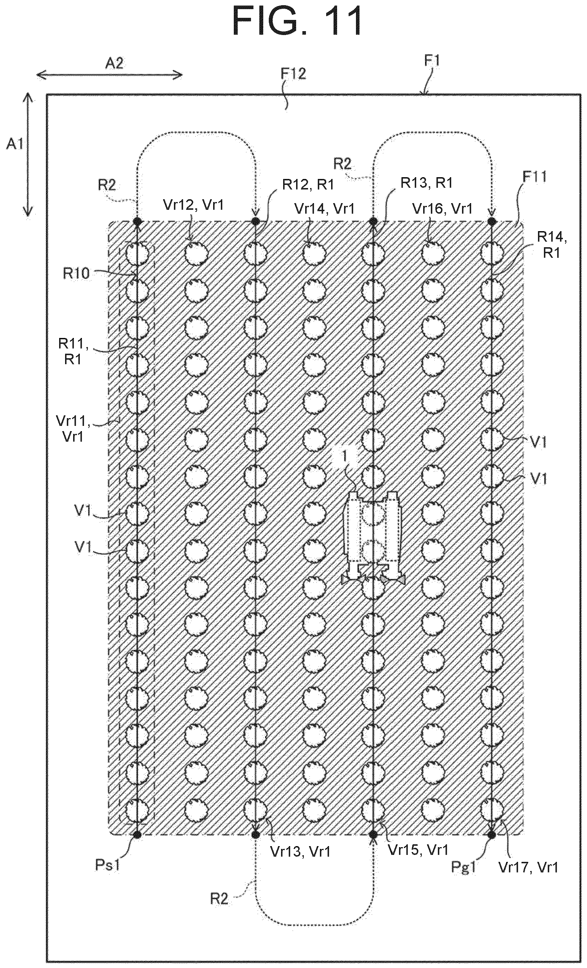

The work vehicle 1 autonomously travels along the target routes R10 (see FIG. 11), whereby the work vehicle 1 can autonomously travel on the travel route. In short, the travel processor 72 causes the work vehicle 1 to autonomously travel on the travel route. The term referred to as "travel route" in the present disclosure means a route on which the work vehicle 1 actually travels when the work vehicle 1 autonomously travels in the field F1 (work site). That is, the travel trajectory of the work vehicles 1 when the work vehicle 1 autonomously travel along the target route R10 is the "travel route". Here, the travel route may be common to (the same as) the target route R10, or may be defined separately from the target route R10. As an example, when the work vehicle 1 autonomously travels along the target route R10, if the work vehicle 1 pass through a position which is offset to the right side by 50 cm from the target route R10, a "travel route" is formed at the position which is offset to the right side by 50 cm from the target route R10. In the present embodiment, it is assumed that the travel route is common to (the same as) the target route R10.

Furthermore, the target route R10 includes a plurality of work routes R1 (see FIG. 11), each of which is a linear route along which the work vehicle 1 performs work (spraying work) on the crop V1 which is a work object (spraying target object). In other words, the travel processor 72 causes the work vehicle 1 to autonomously travel along the work routes R1.

Furthermore, the travel processor 72 controls the traveler 11 in accordance with an operation signal from the manual operation device 8. That is, the controller 7 controls the traveler 11 by the travel processor 72, whereby it is possible to control the traveler 11 in accordance with the operation of the manual operation device 8 by the operator, that is, to manually operate the traveler 11.

The spray processing unit 73 performs a spray control process associated with the work (spraying work) of the sprayer 401. Specifically, when the work vehicle 1 starts autonomously traveling at a work start position, the spray processing unit 73 outputs to the sprayer 401 a switching signal for switching spray patterns based on the control information included in the predetermined target route. Upon receiving the switching signal, the sprayer 401 performs the spraying work in a predetermined spray pattern.

The change processing unit 74 performs a change process for changing an acceleration upper limit value according to a slip condition, which is an upper limit value of the acceleration until the vehicle speed of the work vehicle 1 reaches a target speed. The term referred to as "acceleration" in the present disclosure means a change rate (inclination) of the vehicle speed with respect to a time from the current speed to the target speed when the target speed different from the current speed, which is the current vehicle speed (moving speed) of the work vehicle 1, is set. That is, the larger the acceleration is, the smaller the time required to reach a target speed from the current speed is, but a speed change shock increases. To the contrary, the smaller the acceleration is, the larger the time required to reach the target speed from the current speed is, but the speed change shock decreases.

Here, the acceleration at the time of acceleration of the work vehicle 1 is defined as a positive (plus) acceleration, and the acceleration at the time of deceleration of the work vehicle 1 is defined as a negative (minus) acceleration. Therefore, when a positive acceleration acts on the work vehicle 1 while traveling at a certain vehicle speed, the speed of the work vehicle 1 increases and becomes higher, whereas when a negative acceleration acts on the work vehicle 1, the speed of the work vehicle 1 decreases and becomes lower. The negative acceleration is synonymous with "deceleration".

The "acceleration upper limit value", which is the upper limit value of such the acceleration, is not limited or fixed to a constant value, but can be changed by the change processing unit 74. Here, the change processing unit 74 changes the acceleration upper limit value according to the slip condition. The term referred to as "slip condition" means a condition regarding slippage which occurs while the work vehicle 1 is traveling. The slip condition is described in detail later.

The stop processor 75 performs a stop process for stopping autonomously traveling when the work vehicle 1 deviates from the travel route during the autonomous travel of the work vehicle 1. That is, once the work vehicle 1 deviates from the travel route while the work vehicle 1 is autonomously traveling on the travel route along the target route, the stop processor 75 stops autonomously traveling of the work vehicle 1. In the present embodiment, the stop processor 75 causes the work vehicle 1 to stop in situ by stopping autonomously traveling.

Once a restart condition is met while the work vehicle 1 stops autonomously traveling, the restart processor 76 performs a restart process which causes the work vehicle 1 to return onto the travel route and restart autonomously traveling. That is, in an event where the work vehicle 1 deviates from the travel route and the stop processor 75 causes the work vehicle 1 to stop autonomously traveling, the restart processor 76 causes the work vehicle 1 to restart autonomously traveling if the restart condition is met while the work vehicle 1 is stopping (stopping autonomously traveling). Furthermore, since the work vehicle 1 is deviating from the travel route while the work vehicle 1 is stopping autonomously traveling, the restart processor 76 causes the work vehicle 1 to return onto the travel route and then causes the work vehicle 1 to restart autonomously traveling.

The term referred to as "restart condition" means a condition for causing the work vehicle 1 to restart autonomously traveling. That is, if the restart condition is not met, the work vehicle 1 continues to stop autonomously traveling, and if the restart condition is met, the restart processor 76 causes the work vehicle 1 to restart autonomously traveling. The restart condition is described in detail later.

For example, the display processing unit 77 causes the display unit 211 of the first operation terminal 210, the display unit 611 of the user interface 61, or the like to display various types of information. The display processing unit 77 causes the display unit 211 (or the display unit 611) to display an operation screen for generating the target route R10, the generated target route R10, information about the autonomous travel (the traveling status, the work status, and the like of the work vehicle 1), and the like.

The manual operation device 8 is a device to manually control the work vehicle 1. The work vehicle 1 acquires the operation signal output from the manual operation device 8 in response to the operation of the operator, through the controller 7 (the acquisition processing unit 71).

In the present embodiment, the manual operation device 8 is connected to the controller 7 of the work vehicle 1 with a cable having a sufficient length and is wiredly communicable with the controller 7. Consequently, the operator can manually operate the work vehicle 1 with the manual operation device 8 without getting on the machine body 10 of the work vehicle 1, for example, with standing around the machine body 10. Here, the manual operation device 8 may communicate with the work vehicle 1 (the controller 7) by a wireless communication using radio waves or light, and the operator can also manually operate the work vehicle 1 with the manual operation device 8 from the outside of the machine body 10. In short, it is possible to operate the manual operation device 8 outside the machine body 10. This allows the operator to manually operate the work vehicle 1 at a safe zone apart from the machine body 10 when the operator loads the work vehicle 1 onto a transport vehicle or unloads the work vehicle 1 from the transport vehicle, for example.

### 2.2 Specific Configuration of Sprayer

Next, a specific configuration of the sprayer 401 attached to the machine body 10 as the work machine 400 is described below.

The sprayer 401 performs the spraying work to spray the liquid chemical as a spraying material on the crop V1 which is a spray object. As shown in FIG. 10 and the like, the sprayer 401 includes a nozzle unit 4 and an airflow generation unit 5. The nozzle unit 4 includes the spray nozzle 41 and the like and discharges the liquid chemical as a spraying material stored in the tank 64. The airflow generation unit 5 generates an airflow for conveying the spraying material (liquid chemical) to be discharged from the nozzle unit 4.

The nozzle unit 4 and the airflow generation unit 5 are supported by the support frame 3. Since the support frame 3 is supported by the machine body 10, the sprayer 401 including the nozzle unit 4 and the airflow generation unit 5 is indirectly supported by the machine body 10. In the present embodiment, as the support frame 3 is provided at the rear end of the machine body 10, the nozzle unit 4 and the airflow generation unit 5 supported by the support frame 3 are also provided at the rear end of the machine body 10.

The spray nozzle 41 of the nozzle unit 4 is supported by the support frame 3 and is a part which discharges (sprays) the spraying material. As an example according to the present embodiment, the spray nozzle 41 is a discharge port (spray portion) which is an actual outlet port of the spraying material (liquid chemical). The sprayer 401 includes the plurality of spray nozzles 41 (for example, 12 pieces in the present embodiment).

The nozzle unit 4 includes, in addition to the spray nozzles 41, a spray tube 42, a pump 43 (see FIG. 7), a valve 44 (see FIG. 7), a spray pipe, and the like. In the present embodiment, the spray nozzle 41 is attached to the spray tube 42. The spray tube 42 is connected to the pump 43 through the spray pipe via the valve 44. The pump 43 pneumatically feeds the spraying material (liquid chemical) stored in the tank 64 into the spray tube 42. The valve 44 is an electronic-control-type valve unit such as an electromagnetic valve and changes the pressure (spray pressure), the spray pattern, and the like, when the spraying material is sprayed. Thereby, the liquid chemical in the tank 64 is supplied to the spray nozzle 41 via the valve 44 and the spray tube 42 by the pump 43 and is discharged from the spray nozzle 41. Here, a mist of the liquid chemical is discharged (sprayed) from the spray nozzle 41.

More specifically, as shown in FIGS. 9 and 10, the spray tube 42 is a tube which has a length in the up-down direction D1, and the spray tubes 42 are attached to the vertical frame 3L and the vertical frame 3R of the support frame 3 two each. That is, in the present embodiment, the nozzle unit 4 includes the four spray tubes 42 in total. The two (the pair of) spray tubes 42 attached to each of the vertical frame 3L and the vertical frame 3R are arranged side by side in the right-left direction D2. Each of the spray tubes 42 causes the three spray nozzles 41 to discharge the liquid chemical as the spraying material injected from an upper end of the spray tube 42 while flowing the liquid chemical downward through inside the spray tubes. The spray nozzles 41 are attached to the spray tubes 42 three each, so that the nozzle unit 4 includes the 12 spray nozzles 41 in total.

Each of the spray nozzles 41 is attached to the corresponding spray tube 42 so as to be changeable in its position in the up-down direction D1. This allows each of the spray nozzles 41 to be changed in a spacing between the adjacent spray nozzles 41 and in a height position with respect to the spray tube 42 according to the spray object (the crop V1). Furthermore, each of the spray nozzles 41 is attached to the spray tube 42 so as to be changeable in its position in the up-down direction D1 and the right-left direction D2 with respect to the machine body 10 and in its orientation (angle) according to the spray object. However, in the sprayer 401, the number of the spray nozzles 41 provided in each of the spray tubes 42 and the like can be changed as appropriate according to the type of spray object (the crop V1), the length of the spray tube 42, and the like.

The airflow generation unit 5 generates an airflow for conveying the spraying material (liquid chemical) to be discharged from the spray nozzle 41. The airflow generation unit 5 is supported by the support frame 3 together with the spray nozzle 41. That is, in the present embodiment, the sprayer 401 is an air-assist-method sprayer which sprays the spraying material (liquid chemical) by utilizing the airflow generated by the airflow generation unit 5. This allows the work vehicle 1 to efficiently spray the spraying material (liquid chemical) to the spray object (the crop V1) located at a position relatively distant from the spray nozzle 41.

The airflow generation unit 5 includes a duct 51 and a blower 52. The duct 51 forms a flow channel through which the air flows along the up-down direction D1. The blower 52 causes the air to flow through the duct 51. **In** the airflow generation unit 5, the air blown out from a blowout hole 511 (see FIG. 10) formed in the duct 51 generates the airflow. In short, the airflow generation unit 5 blows out the air which is sent into the duct 51 by the blower 52 from the blowout hole 511 through the flow channel in the duct 51, thereby generating a flow of air (airflow) flowing to the outside of the blowout hole 511. According to this configuration, it is possible to generate a stable airflow over a relatively wide range of area. Furthermore, the airflow generation unit 5 can adjust a flow rate of the airflow by controlling the blower 52. The airflow generation unit 5 can adjust a conveyance distance of the spraying material by adjusting the air flow rate, and thus the larger the air flow rate is, the farther the conveyance distance of the spraying material can be. Therefore, the work vehicle 1 according to the present embodiment can adjust the spray range of area of the spraying material by the sprayer 401.

More specifically, the duct 51 is a pipe having a length in the up-down direction D1, and the vertical frame 3L and the vertical frame 3R of the support frame 3 are equipped with the duct 51 one each. That is, in the present embodiment, the airflow generation unit 5 includes the two ducts 51 in total. On the left side of the left-side duct 51 and the right side of the right side duct 51, the plurality of blowout holes 511 are formed so as to be arranged in a row along the up-down direction D1. Furthermore, the two spray tubes 42 of the nozzle unit 4 are fixed to the rear side of each of the ducts 51.

Here, the duct 51, the two spray tubes 42 attached to the duct 51, and the total of six spray nozzles 41 attached to the two spray tubes 42 are arranged symmetrically in the right-left direction D2. Of the two spray tubes 42, the three spray nozzles 41 provided in the left-side spray tube 42 discharge the spraying material (liquid chemical) toward the left forward, and the three spray nozzles 41 provided in the right-side spray tube 42 discharge the spraying material (liquid chemical) toward the right forward. Therefore, the misty spraying material discharged from the left-side spray nozzle 41 is conveyed to a left side by the airflow blown out to the left side from the duct 51, and the misty spraying material discharged from the right-side spray nozzle 41 is conveyed to a right side by the airflow blown out to the right side from the duct 51.

Thus, among the plurality of (12 pieces of) spray nozzles 41, the three spray nozzles 41, which are provided in the spray tube 42 at the leftmost end, spray the liquid chemical leftward toward the crop V1 located on the left outside of the machine body 10. Among the plurality of spray nozzles 41, the three spray nozzles 41, which are provided in the left-inner-side spray tube 42 adjacent to the spray tube 42 at the leftmost end, spray the liquid chemical rightward toward the crop V1 located in the space Sp1 inside of the machine body 10. Among the plurality of spray nozzles 41, the three spray nozzles 41, which are provided in the spray tube 42 at the rightmost end, spray the liquid chemical rightward toward the crop V1 located on the right outside of the machine body 10. Among the plurality of spray nozzles 41, the three spray nozzles 41, which are provided in the right-inner-side spray tube 42 adjacent to the spray tube 42 at the rightmost end, spray the liquid chemical leftward toward the crop V1 located in the space Sp1 inside of the machine body 10.

According to the above-mentioned configuration, in the sprayer 401, the two spray tubes 42 and the six spray nozzles 41 provided on the vertical frame 3L of the support frame 3 function as a spray unit on the left side. Furthermore, the two spray tubes 42 and the six spray nozzles 41 provided on the vertical frame 3R of the support frame 3 function as a spray unit on the right side. The pair of right and left spray units, which has a spacing (the space Sp1) allowing the crop V1 to pass through between the spray units, is provided at the rear side of the machine body 10 with being able to spray the spray material in the right-left direction D2.

In addition, the sprayer 401 is configured such that the plurality of (12 pieces of) spray nozzles 41 is divided into a plurality of systems and the plurality of systems can be controlled for each system. As an example according to the present embodiment, the six spray nozzles 41 provided in the two inner-side spray tubes 42 in the right-left direction D2 among the four spray tubes 42 are classified into a first system, the three spray nozzles 41 provided in the leftmost spray tube 42 are classified into a second system, and the three spray nozzles 41 provided in the rightmost spray tube 42 are classified into a third system. Therefore, the spray pattern by the sprayer 401 includes a full spray pattern in which the spraying material (liquid chemical) is sprayed from all of the spray nozzles 41 and a limited spray pattern in which a spray direction is limited. The limited spray pattern includes a first spray pattern in which only the six spray nozzles 41 of the first system perform the spray, a second spray pattern in which only the three spray nozzles 41 of the second system perform the spray, and a third spray pattern in which only the three spray nozzles 41 of the third system perform the spray. Furthermore, the limited spray pattern includes a fourth spray pattern in which only the nine spray nozzles 41 of the first and second systems perform the spray, a fifth spray pattern in which only the nine spray nozzles 41 of the first and third systems perform the spray, and a sixth spray pattern in which only the six spray nozzles 41 of the second and third systems performs the spray.

The sprayer 401 is controlled by the controller 7, and the plurality of spray patterns mentioned above (the seven patterns in total, i.e., the full spray pattern and the six limited spray patterns) are switched as appropriate. At least the valve 44 of the nozzle unit 4 is provided for each system of the plurality of spray nozzles 41, and in the present embodiment, the three valves 44 are provided so as to correspond to the three systems (the first system, the second system, and the third system). The plurality of (here, three) valves 44 are individually controlled by the controller 7 to switch the spray patterns. The sprayer 401 can also change the spray range of area of the spraying material by changing the pressure (spray pressure) when spraying the spraying material for each system. Furthermore, in the present embodiment, since the spray range of area of the spraying material can be also adjusted by adjusting the air flow rate of the airflow generation unit 5, more various kinds of spray ranges of area can be realized according to the spray object (the crop V1) or the spraying material (liquid chemical).

Meanwhile, in the present embodiment, as mentioned above, the support frame 3 is not relatively fixed to the machine body 10, but is configured so as to be rotatable about the rotation axis Ax1. As the support frame 3 rotates, the sprayer 401 supported by the support frame 3 also rotates about the rotation axis Ax1.

Furthermore, the work vehicle 1 according to the present embodiment does not include an actuator or the like which actively rotates the support frame 3. Therefore, the support frame 3 can rotate only when external force acts on the support frame 3. For example, when the machine body 10 travels on a laterally inclined slope, the support frame 3 rotates by its own weight, that is, the gravity acting on the support frame 3. Here, if the support frame 3 and the members (the sprayer 401 and the like) supported by the support frame 3 each have a weight symmetrically balanced in the right-left direction D2, the support frame 3 is maintained at a neutral position as long as the machine body 10 is maintained horizontally.

According to the rotatable support frame 3 as mentioned above, for example, while the machine body 10 is traveling on the laterally inclined slope, the support frame 3 rotates, so that a spray amount unevenness (spray unevenness) of the spraying material (liquid chemical) by the sprayer 401 is less likely to occur. In short, if the support frame 3 is fixedly supported by the machine body 10, it is often the case where the machine body 10 inclines when traveling on a laterally inclined slope. In this case, there is a difference between a distance from the spray nozzles 41 to the upper portion of the crop V1 and a distance from the spray nozzles 41 to the lower portion of the crop V1 (spray object), which extends straight in the vertical direction from the ground (the field F1), so that the spray amount unevenness of the spraying material may cause. In contrast, in the work vehicle 1 according to the present embodiment, the support frame 3 rotates, so that the support frame 3 and the spray nozzles 41 and the like supported by the support frame 3 can maintain the same posture as those while the work vehicle 1 is traveling on a horizontal surface. Therefore, there is little difference between the distance from the spray nozzles 41 to the upper portion of the crop V1 and the distance from the spray nozzles 41 to the lower portion of the crop V1 (spray object), which extends straight in the vertical direction from the ground (the field F1), so that the occurrence of the spray amount unevenness of the spraying material can be easily suppressed.

### 3. Travel Control Method for Work Vehicle

In the following, a travel control method for the work vehicle 1 (hereinafter, simply referred to as a "travel control method") performed mainly by the controller 7 is described with reference to FIGS. 11 to 25.

The travel control method according to the present embodiment is performed by the controller 7 having a computer system as a main configuration. In other words, the travel control method is realized by a work vehicle control program (hereinafter, simply referred to as a "control program"). That is, the travel control program according to the present embodiment is a computer program for causing one or more processors to execute each process pertained to the travel control method. Such the control program may be cooperatively executed by the controller 7, the first operation terminal 210, and the like, for example.

As shown in FIG. 5, the controller 7 which performs the travel control method constitutes a travel control system 100. The travel control system 100 is a system which performs control regarding the travel of the work vehicle 1. In other words, the travel control system 100 according to the present embodiment is used to control the work vehicle 1 which works while moving in a field V1 (work site) in which a plurality of crop rows Vr1 (work target rows) consisting of a plurality of crops V1 (work targets) are arranged.

As mentioned above, the travel control system 100 according to the present embodiment includes the controller 7 including the acquisition processing unit 71, the travel processor 72, the spray processing unit 73, the change processing unit 74, the stop processor 75, the restart processor 76, the display processing unit 77, and the like. The controller 7 is mounted on the machine body 10 of the work vehicle 1 and is a part of the components of the work vehicle 1. Therefore, the travel control system 100 constitutes the work vehicle 1 together with the machine body 10 including the traveler 11. In other words, the work vehicle 1 according to the present embodiment includes the travel control system 100 and the traveler 11. The traveler 11 is controlled by the travel control system 100.

### 3.1 Basic Operation

First, the basic operation, which is performed by the travel processor 72 executing the autonomous traveling process when the work vehicle 1 autonomously travels in the field F1 as the work site, is described. Here, it is assumed that the sprayer 401 as the work machine 400 is attached to the machine body 10 of the work vehicle 1 and the work vehicle 1 performs the spraying work.

The travel processor 72 starts the autonomous travel of the work vehicle 1 once the acquisition processing unit 71 acquires the autonomous travel start instruction with a predetermined autonomous travel condition being met. The autonomous travel condition includes, for example, that the target route R10 is set, that a key switch (engine key switch) for starting the engine (power source 63) of the work vehicle 1 is turned ON, and that the work vehicle 1 is standby at a work start position Ps1 (see FIG. 11). That is, the autonomous travel condition is met when the work vehicle 1 is moved to the work start position Ps1 of the target route R10 by the manual operation of the manual operation device 8 with the target route R10 being set and the engine being operating. In this state, for example, when the operator operates the third operating unit 223 of the second operation terminal 220, the second operation terminal 220 issues an autonomous travel start instruction to the work vehicle 1, and thus the travel processor 72 cause the work vehicle 1 to start autonomously traveling.

Here, for example, as illustrated in FIG. 11, it is assumed that the field F1 has the seven crop rows Vr11 to Vr17 as a work site. The field F1 includes a work area F11 (a hatched area in FIG. 11) where the crop rows Vr11 to Vr17 are formed and a non-work area F12 as a headland area formed in the periphery of the work area F11 so as to surround the work area F11. The work area F11 is an area of the field F1 where the work vehicle 1 performs work (i.e., spraying work). The non-work area F12 is an area where the work vehicle 1 does not perform work (i.e., spraying work). That is, the work site (the field F1) includes the work area F11 where the work vehicle 1 performs work and the non-work area F12 where the work vehicle 1 does not perform work.

Furthermore, the work vehicle 1 can autonomously travel (autonomically travel) in the field F1 along the target route R10 which is set previously. For example, the work vehicle 1 autonomously travels from the work start position Ps1 to a work end position Pg1 along the target route R10 including a plurality of work routes R1 and a plurality of movement routes R2. Each of the plurality of work routes R1 is a linear-like route along which the work vehicle 1 performs work (spraying work) on the crop V1 which is the work object (spray object), and each of the plurality of movement routes R2 is a route (non-work route) along which the work vehicle 1 moves between the crop rows Vr1 without performing the spraying work and the movement routes R2 may include a turning route and a straight route.

In the example shown in FIG. 11, the target route R10 includes four work routes R11 to R14 formed in the work area F11 along the longitudinal direction A1 which is the longitudinal direction of the crop row Vr1 (that is, the direction in which the plurality of crops V1 is arranged). Here, as an example, the work route R11 is set on the crop row Vr11, the work route R12 is set on the crop row Vr13, the work route R13 is set on the crop row Vr15, and the work route R14 is set on the crop row Vr17. The movement route R2 is formed so as to connect the adjacent work routes R11 to R14 to each other in the lateral direction A2 in the non-work area F12 located on both sides in the longitudinal direction A1 as viewed from the work area F11. That is, basically, of the target route R10, the work route R1 is formed in the work area F11 of the work site (the field F1), and the movement route R2 is formed in the non-work area F12.

According to the target route R10 mentioned above, the work vehicle 1 travels in the work area F11 from the work start position Ps1 toward one side (the upper side in FIG. 11) of the longitudinal direction A1 along the work route R11, and then travels in the non-work area F12 toward the start position of the subsequent work route R12 along the movement route R2. Subsequently, the work vehicle 1 travels in the work area F11 toward the other side (the lower side in FIG. 11) of the longitudinal direction A1 along the work route R12, and then travels in the non-work area F12 toward the start position of the subsequent work route R13 along the movement route R2. Subsequently, the work vehicle 1 travels in the work area F11 toward one side of the longitudinal direction A1 along the work route R13, and then travels in the non-work area F12 toward the start position of the subsequent work route R14 along the movement route R2. Finally, the work vehicle 1 travels in the work area F11 toward the other side of the longitudinal direction A1 along the work route R14 to the work end position Pg1.

Here, it is assumed that the current position of the work vehicle 1 is specified based on a position of the antenna 21 provided at the center in the right-left direction D2 on the rear side of the machine body 10 in a plan view. Therefore, when the work vehicle 1 autonomously travels along the target route R10, the center in the right-left direction D2 on the rear side of the machine body 10 passes through along the target route R10. As a result, the travel route on which the work vehicle 1 actually travels autonomously coincides with the target route R10. Furthermore, as mentioned above, the work vehicle 1 sprays the spraying material (liquid chemical) from the sprayer 401 to the crop V1 of the crop row Vr1 and the crop V1 of the crop row Vr1 adjacent to the crop row Vr1 while traveling in a posture in which the gate-shaped machine body 10 straddles the single crop row Vr1. The current position of the work vehicle 1 may be specified based on the position of the antenna 22 provided in the front side of the machine body 10 or may be specified based on the positions of both the antennas 21 and 22.

Therefore, for example, as illustrated in FIG. 11, the work vehicle 1 travels on the work route R13 set on the crop row Vr15 in a posture in which the machine body 10 straddles the crop row Vr15. At this time, the first block 10L moves on the work passage between the crop row Vr14 and the crop row Vr15, and the second block 10R moves on the work passage between the crop row Vr15 and the crop row Vr16. Furthermore, at this time, the work vehicle 1 can simultaneously spray the spraying material (liquid chemical) to the crop V1 of the crop row Vr15, the crop V1 of the crop row Vr14 positioned on the left side, and the crop V1 of the crop row Vr16 positioned on the right side.

Furthermore, the work vehicle 1 autonomously travels in a predetermined row order. In the example show in FIG. 11, the work routes R1 are set in every other row in the row arrangement order of the crop rows Vr1, that is, the work routes R1 are set in the crop rows Vr11, Vr13, Vr15, and Vr17. Therefore, the work vehicle 1 autonomously travels on the plurality of crop rows Vr1 in every other row. The work vehicle 1 simultaneously sprays the spraying material (liquid chemical) to the spray objects (the crops V1) planted in the three rows adjacent to one another in the lateral direction A2 while traveling on the plurality of crop rows Vr1 in every other row, thereby enabling the spraying work on all of the spray objects. However, such a setting of the work route R1 is merely an example, and the work vehicle 1 may travel on the crop rows Vr1 in every other row in the arrangement order of the crop rows Vr1, or may travel on the crop rows Vr1 in every plural rows.

Here, the work vehicle 1 performs the spraying work while traveling on the work route R1 and does not perform the spraying work while traveling on the movement route R2. Therefore, the work vehicle 1 starts the spraying work when starting traveling on the work route R1 and stops the spraying work when reaching the end position of the work route R1. The work vehicle 1 travels on the movement route R2 with the spraying work being stopped and restarts the spraying work when reaching the start position of the subsequent work route R1. As a result, the work vehicle 1 performs the spraying work while traveling in the work area F11 and does not perform the spraying work while traveling in the non-work area F12.

In the example shown in FIG. 11, the movement route R2 includes a turning route for a right turn or a left turn in a gradual turn, but a turning mode for changing the orientation of the work vehicle 1 is not limited to "gradual turn", and may include, for example, "pivotal turn", "ultra-pivotal turn", and the like. Furthermore, the turning mode of the work vehicle 1 may include a turning mode such as what is called "fish tail turn", in which the machine body 10 is turned while switching between forward movement and backward movement in order to enable the machine body 10 to turn in a limited space.

Furthermore, for example, the target route R10 is generated based on information such as work vehicle information associated with the work vehicle 1, field information associated with the field F1, and work information associated with work (here, spraying work). The work vehicle information includes, for example, information such as a model name of the work vehicle 1, the position of the antenna 21 of the work vehicle 1, the type of the work machine 400 (here, the sprayer 401), the size and the shape of the work machine 400, the position of the work machine 400 with respect to the machine body 10, and the vehicle speed and the engine speed of the machine body 10 during work. The field information includes information such as the position and the shape of the field F1, the work start position Ps1, the work end position Pg1, and a working direction. The term referred to as "working direction" in the present embodiment means a direction in which the work vehicle 1 travels while performing the spraying work in the work area F11 which is an area obtained by excluding the non-work area F12 such as the headland from the field F1. The work information includes information such as the number of skips, which is the number of work routes R1 to be skipped when the work vehicle 1 turns in the non-work area F12, and the width of the non-work area F12.

For example, the operator may manually set the work vehicle information, the field information, the work information, and the like, by performing a registration operation on the first operation terminal 210. Alternatively, for example, the information such as the position and the shape of the field F1 may be autonomously acquired when the operator manually operates the work vehicle 1 to travel one round along the outer circumstance of the field F1 and records the change of the position information of the antenna 21 at that time.

The generated target route R10 is stored in a memory (storage unit) of the controller of the work vehicle 1 and is used for the autonomous travel by the travel processor 72. The target route R10 can also be displayed on the display unit 211 or the like of the first operation terminal 210.

### 3.2 Non-turning Back-and-forth Travel

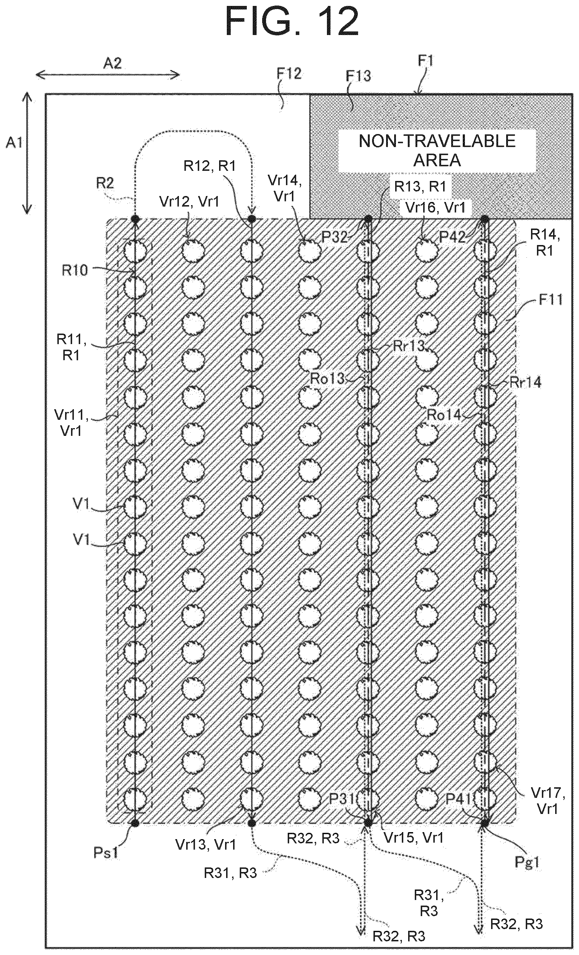

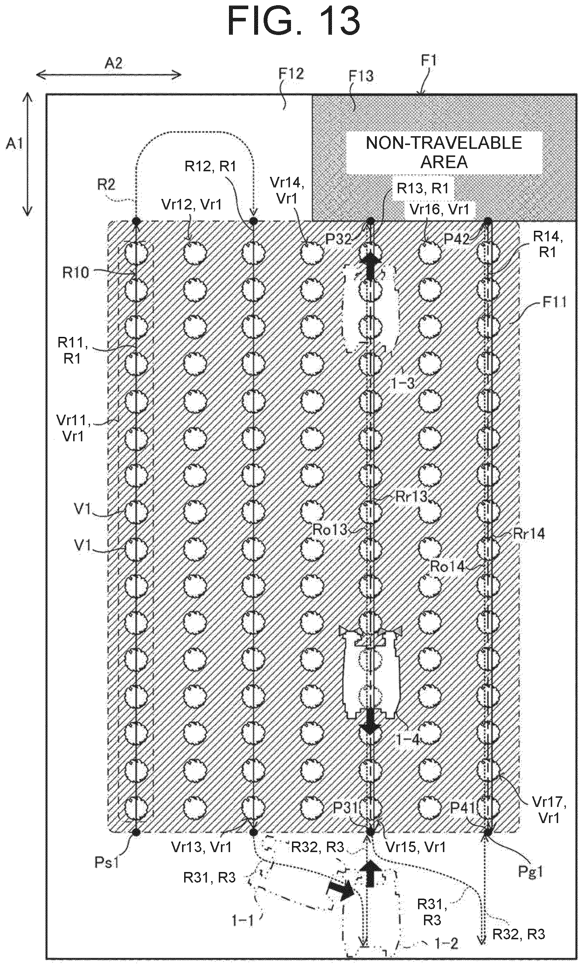

Next, non-turning back-and-forth travel, which is one of the travel modes of the work vehicle 1 during the autonomous travel by the travel processor 72, is described with reference to FIGS. 12 and 13.

Basically, as mentioned above, the movement route F11 for turning the work vehicle 1 is formed in the non-work area F12 as the headland area around the work area R2, and the work vehicle 1 moves between the crop rows Vr1 by traveling on the movement route R2. Also in the examples shown in FIGS. 12 and 13, the work vehicle 1 move from the work route R11 to the next work route R12 by traveling on the movement route R2 formed in the non-work area F12 as the headland area on one side (upper side in FIG. 12) in the longitudinal direction A1 with respect to the work area F11.

On the other hand, in an event when the turn of the work vehicle 1 is difficult in the periphery (headland) of the work area F11 where the work route R1 is formed, depending on a state of the field F1 (work site) where the headland is narrow, the headland does not exist, or the like, there is a possibility that the movement route R2 cannot be generated. In the examples shown in FIGS. 12 and 13, it is assumed that the headland area (non-work area F12) on one side (upper side in FIG. 12) in the longitudinal direction A1 as viewed from the crop rows Vr15 to Vr17 is a non-travelable area F13 where the work vehicle 1 cannot travel, and the movement route R2 cannot be generated in the non-travelable area F13 (non-work area F12).

In the present embodiment, the following configurations are employed in order to provide a travel control method, a travel control program, a travel control system 100, and a work vehicle 1 which can cope with a work site (field F1) where the turn of the work site 1 is difficult in the periphery of the work area F11.

That is, the travel control method according to the present embodiment is a travel control method for the work vehicle 1 that causes the work vehicle 1 to autonomously travel along the work route R1, and includes a non-turning back-and-forth travel as the travel mode of the work vehicle 1. The non-turning back-and-forth travel is a travel mode in which after the work vehicle 1 travels from the first end position toward the second end position of the work route R1, the work vehicle 1 reverses the traveling direction without changing the orientation thereof on the second end side, and the work vehicle 1 travels from the second end position toward the first end position of the work route R1.

In short, in the present embodiment, when traveling on a work route R1, the work vehicle 1 comes back at the second end side by reversing the traveling direction without turning, and travels on the work route R1 in the back-and-forth manner. Here, the traveling direction of the work vehicle 1 includes a forward direction and a backward direction. In the non-turning back-and-forth travel, the work vehicle 1 switches (reverses) on the second end side the traveling direction from the backward direction to the forward direction or from the backward direction to the forward direction. In such a non-turning back-and-forth travel, since the orientation of the work vehicle 1 does not change during the back-and-forth travel on the work route R1, the work vehicle 1 is not required to turn outside the work area F11 (the non-work area F12), and thus it is possible to cope with a work site (field F 1) where the turn of the work vehicle 1 is difficult in the periphery of the work area F11. Furthermore, even in a state where the work vehicle 1 straddles the crop row Vr1, the work vehicle 1 can travel on the work route R1 in the back-and-forth manner.

That is, in the travel control system 100 according to the present embodiment, the travel processor 72 is configured to perform the non-turning back-and-forth travel in which after the work vehicle 1 travels from the first end position toward the second end position of the work route R1, the work vehicle 1 reverses the traveling direction thereof without changing the orientation of the work vehicle 1 on the second end side, and then comes back from the second end position toward the first end position of the work route R1. As a result, it is possible to cope with the work site (field F1) where the turn of the work vehicle 1 is difficult in the periphery of the work area F11.

In the following, the non-turning back-and-forth travel is described in more detail.

As shown in FIGS. 12 and 13, in the case where the headland area (non-work area F12) on one side in the longitudinal direction A1 as viewed from the crop rows Vr15 to Vr17 is the non-travelable area F13 (that is, one sided headland), the work vehicle 1 travels in a non-turning back-and-forth manner so as to avoid the non-travelable area F13. Specifically, the work vehicle 1 travels in a non-turning back-and-forth manner on the work route R13 set on the crop row Vr15 and on the work route R14 set on the crop row Vr17. On the other hand, the work vehicle 1 travels in a turning back-and-forth manner on the work route R11 set on the crop row Vr11 and on the work route R12 set on the crop row Vr13.

Here, in each of the work routes R13 and R14 on which the work vehicle 1 travels in a non-turning back-and-forth manner, an end position on the opposite side (lower side in FIG. 12) to the non-travelable area F13 in the longitudinal direction (longitudinal direction A1) is denoted as a first end position P31 or P41, and an end position on the non-travelable area F13 side (upper side in FIG. 12) is denoted as a second end position P32 or P42.

Referring to the work route R13, after the work vehicle 1 travels from the first end position R31 toward the second end position P32 of the work route R13, the work vehicle 1 reverses the traveling direction thereof without changing the orientation on the second end position P32 side, and then travels from the second end portion P32 toward the first end position P31 of the work route R13, thereby performing the non-turning back-and-forth travel. In short, as the target route R10, for one work route Rr13 a forward route Ro13 from the first end position P31 toward the second end position P32 and a backward route Rr13 from the second end position P32 to the first end position P31 are generated. In FIGS. 12 and 13, the forward route Ro13 and the backward route Rr13 are shown to be shifted in the lateral direction A2, but in actuality, both the forward route Ro13 and the backward route Rr13 are formed on the same work route R13.

Here, the travel control method according to the present embodiment further includes designating the traveling direction of the work vehicle 1 when the work vehicle 1 exits from the first end side of the work route R1 to the headland area (non-work area F12) during the non-turning back-and-forth travel. In short, for example, in the work route R13, after the work vehicle 1 travels on the backward route Rr13, the work vehicle 1 exits from the first end position P31 of the work area F11 to the non-work area F11 as the headland area. At this time, it is possible to designate that in which direction of the forward direction and the backward direction the work vehicle 1 exits the non-work area F12. This makes it possible to detect an obstacle present in the traveling direction of the machine body 10 when the machine body 10 exits to the non-work area F12, by using any one of the obstacle detection device 62 facing the front of the machine body 10 and the obstacle detection device 62 facing the rear of the machine body 10. As a result, it is not necessary to mount the obstacle detection devices 62 having the same performance on the front and rear sides of the machine body 10. For example, even in a case where there is a difference in safety device, stopping accuracy, or the like between the forward movement and the backward movement due to structural restrictions, it is possible to detect and avoid an obstacle with high accuracy.

In particular, in the present embodiment, in the non-turning back-and-forth travel, the traveling direction of the work vehicle 1 when the work vehicle 1 exits from the first end side of the work route R1 to the headland area (non-work area F12) is fixed to the forward direction. In the present embodiment, the obstacle detection device 62 facing the front of the machine body 10 is more accurate than the obstacle detection device 62 facing the rear of the machine body 10. Therefore, it is possible to detect the obstacle present in the traveling direction of the machine body 10 with high accuracy by the work vehicle 1 exiting to the non-work area F12 while moving forward.

Specifically, in the work route R1, when the work vehicle 1 exits from the first end side of the work route R1 to the non-work area F12, the work vehicle 1 performs the non-turning back-and-forth travel in a posture in which the front of the machine body 10 faces the first end position P31 side (lower side in FIG. 12) so that the traveling direction becomes the forward direction. That is, the work vehicle 1 travels backward in the forward route Ro13 from the first end position P31 toward the second end position P32, and travels forward in the backward route Rr13 from the second end position P32 toward the first end position P31.

Accordingly, when the work vehicle 1 enters into the work route R13 from the first end position P31, the work vehicle 1 is controlled so that the traveling direction becomes the backward direction. Therefore, in the non-work area F12 on the first end position P31 side (the lower side in FIG. 12) of the work route R13, a turning route R3 connecting the end position of the work route R12 and the start position (first end position P31) of the work route R13 is generated. The turning route R3 includes a first route R31 on which the work vehicle 1 which finishes traveling on the work route R12 continues to travel while moving forward, and a second route R32 on which the work vehicle 1 travels while moving backward. The second route R32 consists of a route extending toward the first end position R31 side of the work route R13.

That is, as shown in FIG. 13, the work vehicle 1 can enter into the work route R13 from the first end position P31 by moving backward through a switch-back travel in which the traveling direction (forward travel/backward travel) is switched while traveling on the turning route R3. In FIG. 13, the notation of "1-1" indicates the work vehicle 1 which is traveling on the first route R31 in the forward direction, the notation "1-2" indicates the work vehicle 1 which is traveling on the second route R32 in the backward direction, the notation "1-3" indicates the work vehicle 1 which is traveling on the forward route Ro13 in the backward direction, and the notation "1-4" indicates the work vehicle 1 which is traveling on the backward route Rr13 in the forward direction.

Meanwhile, the work vehicle 1 performs work on the work target row (crop row Vr1) while autonomously traveling along the work target row (crop row Vr1) consisting of the plurality of work targets (crops V1). This allows the work vehicle 1 to efficiently perform work (spraying work) on the crop row Vr1 which is an example of the work target row.

Here, the work vehicle 1 perform work on a single work target row (crop row Vr1) while traveling in a non-turning back-and-forth manner on the work route R1 along the single work target row (crop row Vr1). In particular, in the present embodiment, the work vehicle 1 can travel in a posture straddling the work target row (the crop row Vr1). This also allows the work vehicle 1 to efficiently perform work (spraying work) on the work target row (crop row Vr1) which is at a position to be straddled by the work vehicle 1 while traveling on the work route R1 in a non-turning back-and-forth manner.

However, in the travel control method according to the present embodiment, work is not always performed during the non-turning back-and-forth travel, but work is performed only when the work vehicle 1 is directed to a specific travel direction during the non-turning back-and-forth travel. As a result, the timing when the work vehicle 1 performs work can be limited to only when the work vehicle 1 is directed to a specific travel direction (forward travel/backward travel), so that it can be easy to manage work by the work vehicle 1.

Here, the specific traveling direction is the forward direction. That is, the work vehicle 1 performs work (spraying work) only when traveling in the forward direction in the non-turning back-and-forth travel. In this embodiment, in particular, since the work machine 400 is disposed at the rear side of the machine body 10, the machine body 10 is less likely to be exposed to the spraying material (liquid chemical or the like) sprayed from the work machine 400 (sprayer 401). Therefore, for example, a configuration or the like for protecting the machine body 10 from the sprayed material can be simplified or omitted.

In other words, in the travel control method, in the non-turning back-and-forth travel, the work vehicle 1 performs work on the crops in only any one of the forward route Ro31 on which the work vehicle 1 travels from the first end position P31 toward the second end position P32, and the backward route Rr13 on which the work vehicle 1 travels from the second end position P32 toward the first end position P31. In the present embodiment, as mentioned above, the work vehicle 1 performs work (spraying work) on the crops only in the backward Rr13 on which the work vehicle 1 moves forward. This makes it possible to avoid overlapped work on the same work object (crop V1) in the forward route Ro13 and the backward route Rr13, thereby enabling an efficient work.

Similarly, referring to the work route R14, after the work vehicle 1 travels from the first end position P41 toward the second end position P42 of the work route R14, the work vehicle 1 reverses the traveling direction without changing the orientation thereof on the second end position P42 side, and travels from the second end position P42 toward the first end position P41 of the work route R14, thereby performing the non-turning back-and-forth travel. In short, as the target route R10, for a single work route R14 the forward route Ro14 from the first end position P41 toward the second end position P42 and the backward route Rr14 from the second end position P42 toward the first end position P41 (work end position Pg1) are generated. In FIGS. 12 and 13, the forward route Ro14 and the backward route Rr14 are shown to be shifted in the lateral direction A2, but in actuality, both the forward route Ro14 and the backward route Rr14 are formed on the same work route R14.

Similarly to the work route R13, also when the work vehicle 1 travels on the work route R14 in the non-turning back-and-forth manner, the work vehicle 1 enters into the work route R14 by moving backward from the first end position P41 through the turning route R3 which connects the end position (first end position P31) of the work route R13 and the start position (first end position P41) of the work route R14. Then, the work vehicle 1 travels on the forward route Ro14 in the backward direction from the first end position P41 toward the second end position P42, and travels on the backward route Rr14 in the forward direction from the second end position P42 toward the first end position P41. Furthermore, the work vehicle 1 performs work (spraying work) only in the backward route Rr14 where the work vehicle 1 moves forward.

Meanwhile, in the examples shown in FIGS. 12 and 13, the work vehicle 1 does not travel in the non-turning back-and-forth manner on all of the work routes R1, but travels in the non-turning back-and-forth manner along only the work routes R13 and R14 which are a part of the work routes R1. The remaining work routes R11 and R12 are connected by the movement route R2 for turning the work vehicle 1, and the work vehicle 1 travels in the turning back-and-forth manner. In this way, in the present embodiment, the travel modes of the work vehicle 1 include the non-turning back-and-forth travel and the turning back-and-forth travel, and the non-turning back-and-forth travel/the turning back-and-forth travel is selected for each work route R1. Therefore, the non-turning back-and-forth travel and the turning back-and-forth travel are mixed as the travel mode in a single field F1.

In short, the travel control method according to the present embodiment further includes performing the turning and back-and-forth travel in which after the work vehicle 1 travels from the first end position toward the second end position of the work route R11, turns on the second end side, and travels from the second end side toward the first end side of the work route R12, and selecting the non-turning back-and-forth travel or the turning back-and-forth travel for each work route R1. In the example shown in FIGS. 12 and 13, among the work routes R11 to R14, the turning back-and-forth travel is selected for the work routes R11 and R12, and the non-turning back-and-forth travel is selected for the work routes R13 and R14. This allows the work vehicle 1 to employ different travel modes for each place in the field F1 to perform more efficient work.

In the present embodiment, the non-turning back-and-forth travel is selected particularly for the work route R1 with the second end side where the turn of the work vehicle 1 is difficult. This allows the non-turning back-and-forth travel to be applied only to the work route R1 where the turn of the work vehicle 1 is difficult in the field F1 having the one side headland and the like, and allows the turning back-and-forth travel to be applied to the other work route R1. As a result, it is possible to shorten the working time as much as possible while enlarging the workable area.

### 3.3 Change Process

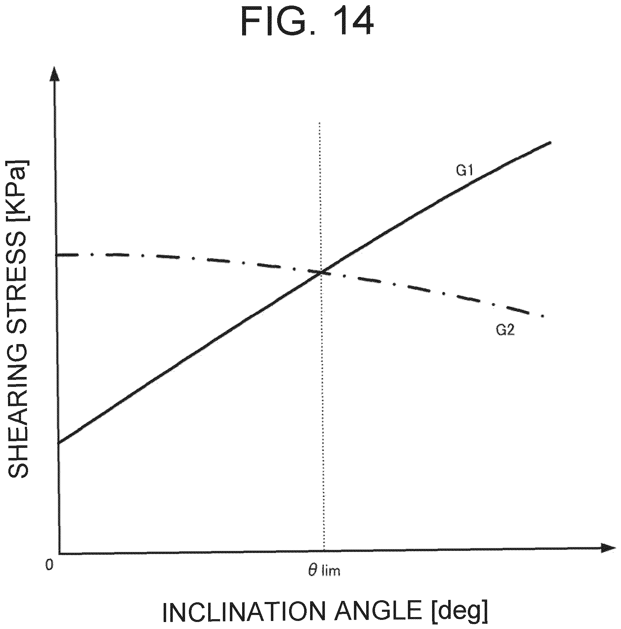

Next, a change process of changing the acceleration upper limit value by the change processing unit 74 is described with reference to FIGS. 14 to 18.

If the upper limit value of accelerations (acceleration upper limit value) when the work vehicle 1 accelerates or decelerates is fixed, for example, when the work vehicle 1 rapidly accelerates on the field F1 (work site) having a steep slope or a slick road surface condition due to pebbles, mud, or the like, the crawlers 111L and 111R may idle (slip) to lead to route deviation, stacking, or the like. In the present embodiment, the following configuration is employed in order to provide a travel control method, a travel control program, a travel control system 100, and a work vehicle 1 in which slippage is less likely to occur during travel.

In the present embodiment, as mentioned above, the upper limit value of the acceleration (acceleration upper limit value) until the vehicle speed (moving speed) of the work vehicle 1 reaches the target speed is not fixed to a constant value, but is changed by the change processing unit 74 according to the slip condition regarding the slippage which occurs during traveling of the work vehicle 1.

That is, the travel control method according to the present embodiment includes acquiring the slip condition regarding the slippage which occurs during traveling of the work vehicle 1, and changing the acceleration upper limit value, which is an upper limit value of acceleration until the vehicle speed of the work vehicle 1 reaches a target speed, according to the slip condition. Basically, the change processing unit 74 decreases the acceleration upper limit value when the slip condition is under a situation where a slippage of the work vehicle 1 is likely to occur, and increases the acceleration upper limit value when the slip condition is under a situation where the slippage of the work vehicle 1 is unlikely to occur.

Furthermore, the travel control method according to the present embodiment further includes causing the work vehicle 1 to travel autonomously by the travel processor 72. The acceleration upper limit value is the upper limit value of acceleration when the vehicle speed reaches from the current vehicle speed to the target vehicle speed during the autonomous travel of the work vehicle 1. In short, the travel processor 72 controls the vehicle speed of the work vehicle 1 by increasing or decreasing the speed of the work vehicle 1 so that the vehicle speed of the work vehicle 1 reaches the target vehicle speed from the current vehicle speed during the autonomous travel of the work vehicle 1. At the acceleration or deceleration during such the autonomous travel, the upper limit value of the acceleration is prescribed by the acceleration upper limit value which is changed by the change processing unit 74.

As a result, during the autonomous travel, for example, the work vehicle 1 moderately accelerates or decelerates under a situation where the slippage is likely to occur, such as a slick road surface condition, thereby enabling the work vehicle 1 to easily avoid slipping. On the other hand, under a situation where the slippage is unlikely to occur, the work vehicle 1 can quickly accelerates or decelerates, thereby leading to an improvement in work efficiency.

A specific example of how to change the acceleration upper limit value according to the slip condition by the change processing unit 74 is described below.

As a premise, a shear strength τ of a ground surface of the field F1 (work site) is expressed by "τ = c + σ · tan (φ)" using an adhesive force c, a vertical stress σ, and a shear resistance angle (internal friction angle) φ. If the shearing stress due to the crawlers 111L and 111R during the travel of the machine body 10 exceeds the shearing strength τ mentioned above, the soil on the ground surface slips and the crawlers 111L and 111R run idle. Therefore, for example, in a case where the field F1 is covered with pebbles, the adhesive force c becomes smaller, so that the shearing strength τ also becomes smaller. As a result, even when the same shearing stress is applied, the crawler 111L and the 111R are more likely to run idle. Furthermore, for example, in a case where the field F1 is a wet clay, although the adhesive force c becomes larger, the shear resistance angle φ becomes smaller and thus the shear strength τ becomes smaller. As a result, even when the same shearing stress is applied, the crawler 111L and the 111R are more likely to run idle.

FIG. 14 is a graph showing an example of a relationship between a total shearing stress G1 considering the weight, acceleration, work load, and the like of the work vehicle 1 and the shearing strength G2 of the ground reflecting soil parameters such as the adhesive strength c and the shearing resistance angle φ, and the inclination angle of the field F1 (work field). In FIG. 14, an ordinate axis represents the inclination angle (degree) of the field F1, and an abscissa axis represents the shearing stress (KPa). In FIG. 14, when the total shearing stress G1 exceeds the shearing strength G2, the crawlers 111L and 111R begins running idle. As a result, when the inclination angle of the field F1 becomes larger than the angle θₗᵢₘ at which the total shearing stress G1 and the shearing strength G2 intersect each other, the crawlers 111L and 111R run idle.

Hereinafter, the inclination angle (θₗᵢₘ) at which the total shearing stress G1 and the shearing strength G2 intersect each other is referred to as a "limit inclination" of the field F1.

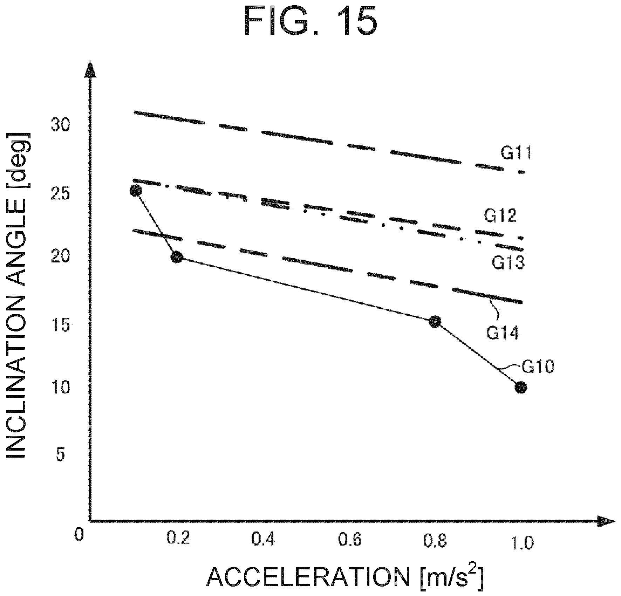

FIG. 15 is a graph showing a relationship between the limit inclination of the field F1 and the acceleration of the work vehicle 1, in which an ordinate axis represents the acceleration (m/s²) and an abscissa axis represents the inclination angle (degree). FIG. 15 shows an example of the limit inclination for each representative soil parameter while changing the acceleration of the work vehicle 1 which is an operable parameter. In FIG. 15, a one-dot chain line G11 illustrates a case where the soil is silt, a dashed line G12 illustrates a case where the soil is gravel, a two-small-dot chain line G13 illustrates a case where the soil is low-plasticity clay, and a two-dot chain line G14 illustrates a case where the soil is muddy clay. For example, in a silty field F1, it is possible to avoid running idle of the crawlers 111L and 111R by applying acceleration corresponding to the inclination angle of the field F1 to be fallen within the lower range of the one-dot chain line G11.

In the present embodiment, as an example, so as to be able to avoid running idle of the crawlers 111L and 111R in various soils, an upper limit value of the acceleration (an upper limit value of the acceleration) is set depending on the inclination angle of the field F1 as shown in a solid line G10 in FIG. 15. Here, the inclination angle of the field F1 is specified by the inclination in the front-rear direction D3 of the machine body 10 of the work vehicle 1. The inclination in the front-rear direction D3 of the machine body 10 of the work vehicle 1 is detected by the inertial measurement unit of the sensor 66.

That is, in the present embodiment, the slip condition includes a condition regarding the inclination of the work vehicle 1 in the front-rear direction D3. Thereby, it is possible to acquire the slip condition based on the inclination of the field F1 in the front-rear direction D3 of the work vehicle 1 without actually measuring the inclination angle of the field F1.

Here, as shown by the solid line G10 in FIG. 15, the larger the inclination (in the front-rear direction D3) of the work vehicle 1 is, the smaller the acceleration upper limit value is. In short, as the inclination of the work vehicle 1 (corresponding to the inclination angle of the field F1) increases, the crawlers 111L and 111R are more likely to run idle. Therefore, the change processing unit 74 decreases the acceleration upper limit value. On the other hand, as the inclination of the work vehicle 1 (corresponding to the inclination angle of the field F1) decreases, the crawlers 111L and 111R are less likely to run idle. Therefore, the change processing unit 74 increases the acceleration upper limit value. As a result, the work vehicle 1 moderately accelerates or decelerates under a situation where the slippage is likely to occur, thereby enabling the work vehicle 1 to easily avoid slipping.

Furthermore, in the present embodiment, the acceleration upper limit value is validated only when one of an acceleration time and a deceleration time of the work vehicle 1 is a restriction target time. As an example, if the acceleration time of the work vehicle 1 is the restriction target time, the travel processor 72 restricts the upper limit of the acceleration of the work vehicle 1 to the acceleration upper limit value or less only during the acceleration time (restriction target time) of the work vehicle 1. In this case, since the acceleration upper limit value is invalidated during the deceleration time of the work vehicle 1, the travel processor 72 does not restrict the upper limit of the acceleration of the work vehicle 1 to the acceleration upper limit value or less. Thereby, when it is not necessary to restrict the upper limit of the acceleration, the acceleration of the work vehicle 1 is not restricted, and thus the work efficiency of the work vehicle 1 can be improved.

Here, according to the inclination direction with respect to the traveling direction of the work vehicle 1, either the acceleration time or the deceleration time of the work vehicle 1 is selected as the restriction target time. That is, depending on whether the inclination direction of the field F1 is "upward" or "downward" with respect to the traveling direction of the work vehicle 1, either the acceleration time or the deceleration time is selected as the restriction target time. Thereby, when it is not necessary to restrict the upper limit of the acceleration, the acceleration of the work vehicle 1 is not restricted, and thus the work efficiency of the work vehicle 1 can be improved.

Specifically, if the inclination direction is upward with respect to the traveling direction of the work vehicle 1, the acceleration time is set as the restriction target time, and if the inclination direction is downward with respect to the traveling direction of the work vehicle 1, the deceleration time is set as the restriction target time. In short, for example, during the deceleration time when the inclination direction is upward with respect to the traveling direction of the work vehicle 1, since the direction of the shearing stress due to the crawlers 111L and 111R is opposite to the direction of gravity, the work vehicle 1 is less likely to slip due to deceleration. Similarly, during the acceleration time when the inclination direction is downward with respect to the traveling direction of the work vehicle 1, since the direction of the shearing stress due to the crawlers 111L and 111R is opposite to the direction of gravity, the work vehicle 1 is less likely to slip due to acceleration.

Therefore, in a situation where the work vehicle 1 is less likely to slip due to such the acceleration and deceleration, it is possible to improve the work efficiency of the work vehicle 1 without restricting the acceleration of the work vehicle 1.

Furthermore, in the present embodiment, at least one of ON/OFF and the degree of change of the acceleration upper limit value can be set as a setting item. That is, the change processing unit 74 does not always change the acceleration upper limit value (according to the slip condition), but can set at least one of ON/OFF and the degree of change of the acceleration upper limit value.

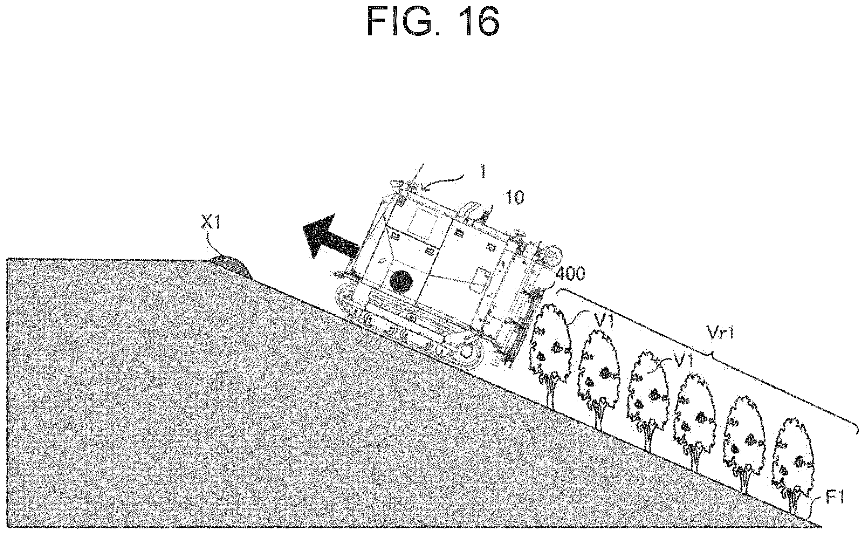

Specifically, in an example shown in FIG. 16, it is assumed that the work vehicle 1 travels forward in the field F1 so as to ascend the slope along the crop row Vr1, and the work vehicle 1 finishes working and stops at a zero (0) vehicle speed at a point where the work vehicle 1 passes through the crop row Vr1. In this case, in order that the work vehicle 1 accelerates again and passes through the work area F11, it is necessary for the work vehicle 1 to ascend the remaining slope (uphill slope) to the top of the hill by traveling forward. Furthermore, as shown in FIG. 16, if there is an obstacle X1 such as a bump or a step in front of the working machine 1 in the traveling direction, it is necessary to accelerate the working machine 1 to a speed sufficient to pass through the obstacle X1 in order to force the work vehicle 1 to get over the obstacle X1.

However, if the acceleration upper limit value is decreased as the inclination (in the front-rear direction D3) of the work vehicle 1 increases, for example, as shown in FIG. 16, the upper limit value of acceleration of the work vehicle 1 is significantly restricted to a small value in a steeply inclined field F1, so that it is difficult for the work vehicle 1 to get over the obstacle X1. In this way, in the present embodiment, since there is a situation where it is not preferable to change the acceleration upper limit value, at least one of ON/OFF and the degree of change of the acceleration upper limit value can be set. That is, in the situation illustrated in FIG. 16, it is possible to avoid the acceleration upper limit value from becoming too small by turning off the change of the acceleration upper limit value or by suppressing the degree of the change to be small.

In particular, in the present embodiment, the setting item (at least one of ON/OFF and the degree of the change of the acceleration upper limit value) is set in accordance with the operation of the user. In the situation illustrated in FIG. 16, for example, this makes it possible to turn off the change of the acceleration upper limit value or suppress the degree of the change to be small in accordance with the operation of the user.

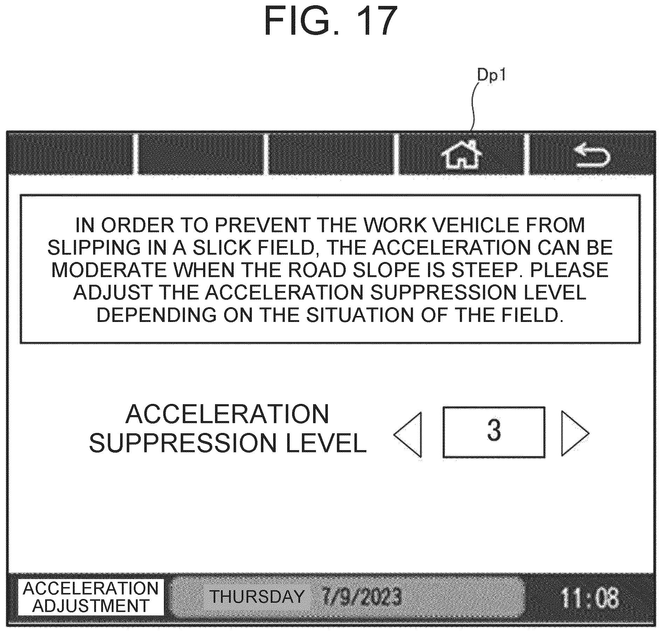

Specifically, the acceleration-adjustment screen Dp1 as illustrated in FIG. 17 accepts an operation of adjusting the degree of the change of the acceleration upper limit by the user (operator). The acceleration-adjustment screen Dp1 is a screen which is displayed on, for example, the display unit 211 of the first operation terminal 210 or the display unit 611 of the user interface 61 by the display processing unit 77.

On the acceleration-adjustment screen Dp1, for example, a message to urge the user to adjust the degree of the change of the acceleration upper limit value, which says "In order to prevent the work vehicle from slipping in a slick field, the acceleration can be moderate when the road slope is steep. Please adjust the acceleration suppression level depending on the situation of the field.", is displayed. On the acceleration-adjustment screen Dp1, an "acceleration suppression level" which can be changed by operating the cursor key is displayed. The acceleration suppression level is a parameter which prescribes the degree of the change of the acceleration upper limit value as numerical steps.

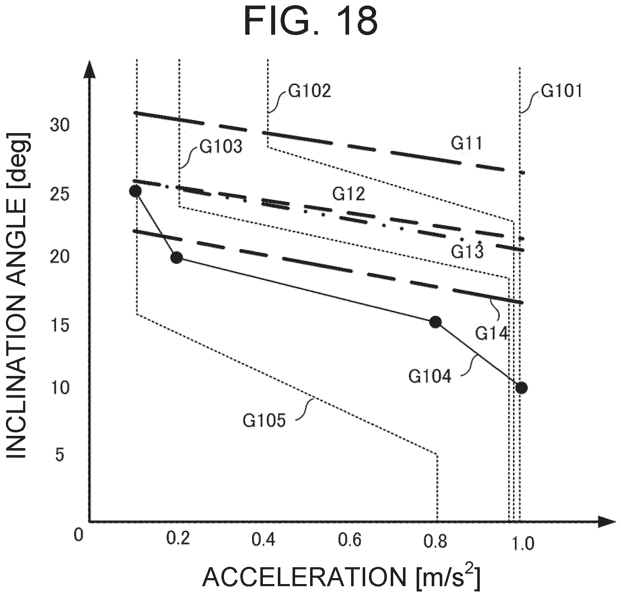

FIG. 18 illustrates an example of lines G101 to G105 expressing the upper limit values of the accelerations (acceleration upper limit values) according to the inclination angle of the field F1 for each acceleration suppression level. Similarly to FIG. 15, FIG. 18 is a graph showing a relationship between the limit inclination of the field F1 and the accelerations of the work vehicle 1, in which an ordinate axis represents the acceleration (m/s²) and an abscissa axis represents the inclination angle (degree). In FIG. 18, a dashed line G101 illustrates a case where the acceleration suppression level is "1", a dashed line G102 illustrates a case where the acceleration suppression level is "2", a dashed line G103 illustrates a case where the acceleration suppression level is "3", a dashed line G104 illustrates a case where the acceleration suppression level is "4", and a dashed line G105 illustrates a case where the acceleration suppression level is "5". As can be seen from FIG. 18, the larger the acceleration suppression level is, the greater the degree of the change of the acceleration upper limit value is.

Here, an example, in which the upper limit value of the acceleration when the vehicle speed reaches from the current vehicle speed to the target vehicle speed during the autonomous travel of the work vehicle 1 is restricted to the acceleration upper limit value, is described. However, the present disclosure is not limited thereto. That is, also during the manual travel of the work vehicle 1, the upper limit value of the acceleration when the vehicle speed reaches from the current vehicle speed to the target vehicle speed may be restricted to the acceleration upper limit value.

### 3.4 Stop process and Restart process

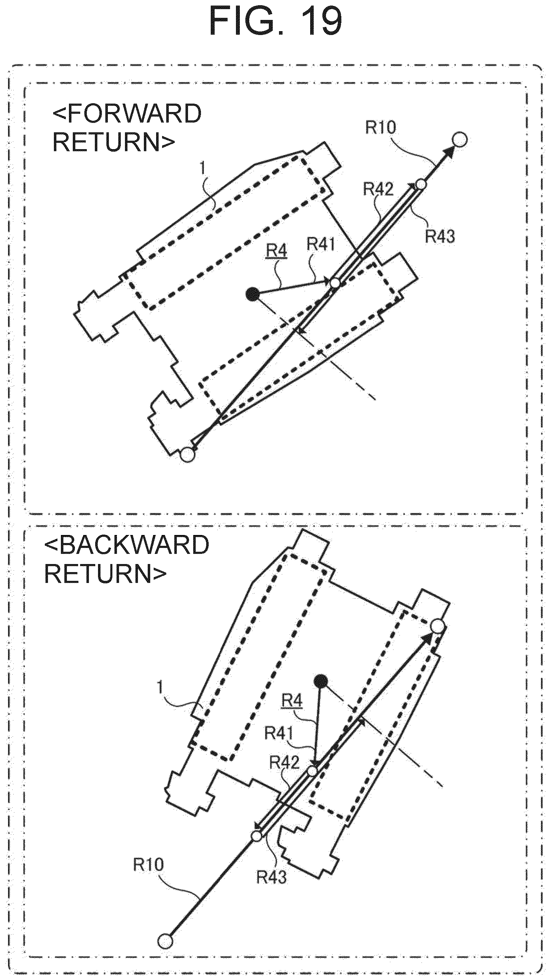

Next, a stop process by the stop processor 75 and a restart process by the restart processor 76 are described with reference to FIGS. 19 to 22.

During the autonomous travel of the work vehicle 1, the crawlers 111L and 111R may run idle (slip) due to, for example, "mud" on the travel route (target route R10), and the work vehicle 1 may make "route deviation" in which the work vehicle 1 deviates from the travel route (target route R10). When the work vehicle 1 deviates from the travel route (target route R10) during the autonomous travel, the operator might stop the work vehicle in situ and then operate manually the work vehicle 1 to return it onto the travel route. However, in this case, it is necessary for the operator to approach the vicinity of the work vehicle 1 in the field F1 (work site) in order to check out the status of the work vehicle 1 and manually operate the work vehicle 1, and thus it results in a low work efficiency.

In the present embodiment, the following configuration is employed in order to provide a travel control method, a travel control program, a travel control system 100, and a work vehicle 1 in which work efficiency is less likely to decrease.

The travel control method according to the present embodiment includes causing the work vehicle 1 to autonomously travel on the travel route, causing the work vehicle 1 to stop the autonomous travel when the work vehicle 1 deviates from the travel route during the autonomous travel of the work vehicle 1, and causing the work vehicle 1 to return onto the travel route to restart the autonomous travel when a restart condition is met during the stoppage of the autonomous travel. In the present embodiment, as mentioned above, the travel route is common to (the same as) the target route R10.

According to this configuration, when the work vehicle 1 deviates from the travel route (target route R10) and then stops autonomously traveling, the work vehicle 1 automatically returns onto the travel route (target route R10) and restarts autonomously traveling if the restart condition is met. Consequently, it is not necessary for the operator to approach the vicinity of the work vehicle 1 in the field F1 (work field) in order to check out the status of the work vehicle 1 and manually operate the work vehicle 1, and thus there is an advantage that the work efficiency is less likely to decrease.

In the present embodiment, as mentioned above, when the work vehicle 1 deviates from the travel route (the target route R10), the stop processor 75 causes the work vehicle 1 to stop in situ by stopping autonomously traveling. However, a stop position of the work vehicle 1 changes due to a braking distance and the like. In a state where the work vehicle 1 stops, once the restart condition is met, the restart processor 76 causes the work vehicle 1 to return onto the travel route and then causes the work vehicle 1 to restart autonomously traveling.

In the present embodiment, the restart condition includes a restart operation by the user. Specifically, the restart condition includes a specific restart operation performed by the operator (user) on the first operation terminal 210 or second operation terminal 220. Therefore, when the work vehicle 1 deviates from the travel route (target route R10) and stops autonomously traveling, the operator can restart the autonomous travel of the work vehicle 1 by performing the restart operation on the first operation terminal 210 or the second operation terminal 220 without approaching the vicinity of the work vehicle 1, and thus workload of the operator is reduced and decreasing of the work efficiency is suppressed to be small.

Here, as shown in FIG. 19, the restart processor 76 generates a return route R4 along which the work vehicle 1 travels to return onto the travel route (target route R10). That is, once the restart condition is met, the restart processor 76 generates the return route R4 which is separate from the target route R10, and causes the work vehicle 1 to travel along the return route R4, thereby returning the work vehicle 1 onto the target route R10. Thus, since the return route R4 is generated every time the route deviation occurs, it is possible to perform the return operation suitable for a situation where the work vehicle 1 stops autonomously traveling.

Furthermore, once the stop processor 75 detects at least one of a lateral deviation abnormality and an azimuthal deviation abnormality, the stop processor 75 determines that the route deviation occurs, and causes the work vehicle 1 to stop autonomously traveling. The lateral direction deviation abnormality means that the lateral direction deviation, that is, the deviation amount of the current position of the machine body 10 from the target route R10 in a direction orthogonal to the target route R10 takes an abnormal value. The azimuthal deviation abnormality means that the azimuthal deviation, that is, the deviation amount of the traveling direction (azimuth) of the machine body 10 from the target route R10 takes an abnormal value.

The restart processor 76 enters into a restart standby state only when both conditions are met, in which the work vehicle 1 stops autonomously traveling due to at least one of the lateral direction deviation abnormality and the azimuthal deviation abnormality (i.e., route deviation) during the autonomous travel, and the lateral direction deviation and the azimuthal deviation of the work vehicle 1 during stopping are less than predetermined limit values, and then the restart processor 76 causes the work vehicle 1 to restart autonomously traveling when the restart condition is met. That is, even when the work vehicle 1 stops the autonomously traveling due to the route deviation, if at least one of the lateral direction deviation and the azimuthal deviation of the work vehicle 1 during stopping is equal to or larger than the predetermined limit value, the work vehicle 1 does not restart autonomously traveling even if the restart condition is met.

As mentioned above, in the present embodiment, when the deviation amount of the work vehicle 1 from the travel route is equal to or larger than the predetermined limit value, the restart processor 76 causes the work vehicle 1 to stop the operation to return onto the travel route. When the deviation amount is large, there is a high possibility that the machine body 10 comes in contact with the crop V1 on the target route R10. As a result, if the work vehicle 1 performs the autonomous travel in this state, the crop V1 may be damaged or the work vehicle 1 may not perform an operation as expected. Therefore, under such a state, the restart processor 76 does not enter into the restart standby state, but prohibit the work vehicle from performing the operation to return onto the travel route.

It is preferable to notify the surrounding of whether or not the work vehicle 1 is under the restart standby state, for example, by the indicator 65 or the like. That is, when the work vehicle 1 is in the restart standby state, by lighting the indicator 65 normally, it is possible to inform the operator being around the field F1 that the restart operation can be performed. On the other hand, when the work vehicle 1 is not being in the restart standby state due to the deviation amount being equal to or greater than the predetermined limit value, or the like, by lighting the indicator 65 abnormally (for example, lighting in red), it is possible to inform the operator being around the field F1 that the restart operation cannot be performed.

In particular, the restart process by the restart processor 76 is described in more detail below.

In the present embodiment, the restart processor 76 designates a return item including at least one of a movement direction and a return position of the work vehicle 1 when the work vehicle 1 returns onto the travel route. That is, in the return operation for causing the work vehicle 1 to return onto the travel route (target route R10), at least one of the movement direction (forward/backward) of the work vehicle 1 and where the work vehicle 1 should return (return position) is designated as the return item.

FIG. 19 illustrates a return route R4 when the work vehicle 1 is returned onto the travel route (target route R10) with the work vehicle 1 deviating from the travel route (target route R10). Here, as shown in the upper part of FIG. 19, when the movement direction of the work vehicle 1 is designated as "forward" as the return item, the work vehicle 1 returns onto the travel route (target route R10) by traveling forward along a first return route R41 and a second return route R42 and traveling backward along a third return route R10. On the other hand, as shown in the lower part of FIG. 19, when the movement direction of the work vehicle 1 is designated as "backward" as the return item, the work vehicle 1 returns onto the travel route (target route R10) by traveling backward along the first return route R41 and the second return route R42 and traveling forward along the third return route R43.

In this way, by designating at least one of the movement direction and the return position of the work vehicle 1 as the return item, it is possible to perform a more flexible return operation suitable for a situation where the work vehicle 1 stops autonomously traveling.

Here, the return item is designated based on at least one of the current position, the posture, and the inclination direction (of the inclined surface of the field F1) of the work vehicle 1. For example, the movement direction (forward/backward) of the work vehicle 1 in the return operation as the return item is designated based on the current position and the posture (the direction of the front end portion of the machine body 10 in a plan view) of the reference point (for example, the center point) of the machine body 10.

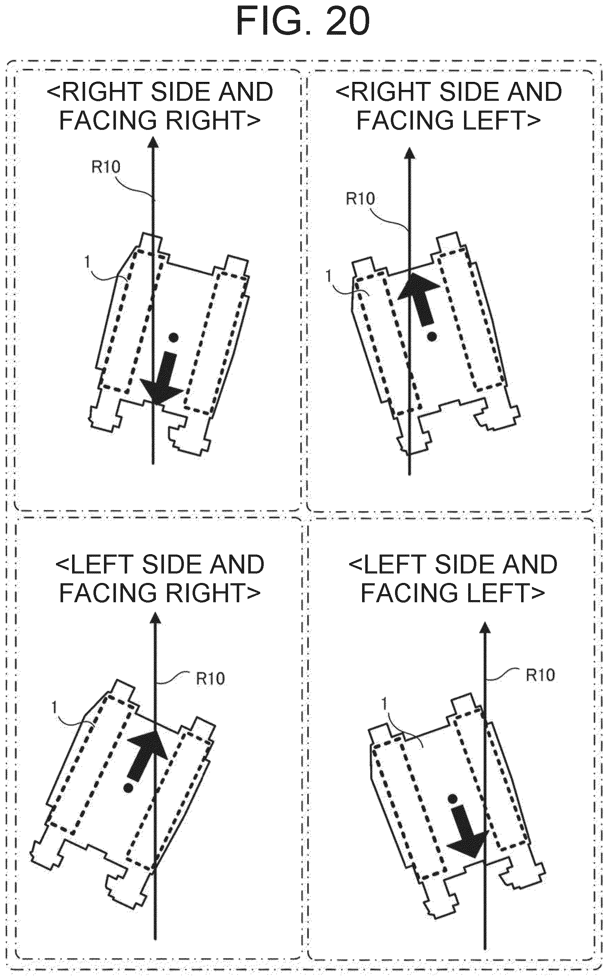

FIG. 20 illustrates a relationship between the current position and the posture of the work vehicle 1, and the movement direction (forward/backward) of the work vehicle 1 in the return operation. That is, as shown in the upper left of FIG. 20, if the current position (the reference point) of the machine body 10 is on the right side of the target route R10 (travel route) and the machine body 10 (the front end portion of the machine body 10) has a posture facing right, the movement direction of the work vehicle 1 in the return operation is "backward". On the other hand, as shown in the upper right of FIG. 20, if the current position of the machine body 10 is on the right side of the target route R10 and the machine body 10 has a posture facing left, the movement direction of the work vehicle 1 in the return operation is "forward".

Similarly, as shown in the lower left of FIG. 20, if the current position (the reference point) of the machine body 10 is on the left side of the target route R10 (travel route) and the machine body 10 (the front end portion of the machine body 10) has a posture facing right, the movement direction of the work vehicle 1 in the return operation is "forward". On the other hand, as shown in the lower right of FIG. 20, if the current position of the machine body 10 is on the left side of the target route R10 and the machine body 10 has a posture facing left, the movement direction of the work vehicle 1 in the return operation is "backward".

In this way, a designation item (the movement direction of the work vehicle 1 in the return operation or the like) is designated based on (at least one of) the current position and the posture of the work vehicle 1, and thus the machine body 10 is less likely to come into contact with the crop V1 on the target route R10, for example.

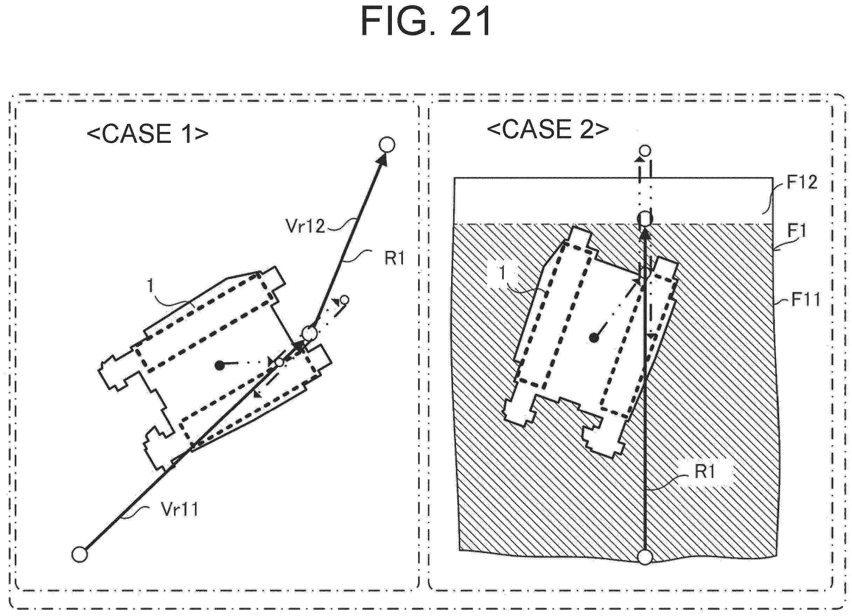

Alternatively, as in Cases 1 and 2 shown in FIG. 21, when the current position of the work vehicle 1 meets a specific condition, the work vehicle 1 does not follow the movement direction shown in FIG. 20. Specifically, for example, in the example of Case 1 shown on the left side of FIG. 21, since the crop row Vr12 intersecting with the crop row Vr11 exists ahead (in front of the traveling direction) the end point of the currently worked crop row Vr11, there is a risk that the machine body 10 comes into contact with the crop row Vr12 if the work vehicle 1 moves "forward" in the return operation of the work vehicle 1. In the example of Case 1 shown on the right side of FIG. 21, the headland area (non-work area R1) existing behind (in front of the traveling direction) the end point of the work route F12 is narrow, and it is difficult for the work vehicle 1 to enter. Therefore, if the work vehicle 1 moves "forward" in the return operation of the work vehicle 1, there is a risk that the machine body 10 protrudes from field F1.

Therefore, for example, in a case where the current position of the work vehicle 1 is close to the end point of the work route R1, the movement direction of the work vehicle 1 in the return operation is designated as "backward". On the other hand, in a case where the current position of the work vehicle 1 is close to the start point of the work route R1, the movement direction of the work vehicle 1 in the return operation is designated as "forward".

Furthermore, regarding the inclination direction (of the inclined surface of the field F1), it is basically preferable to designate the movement direction of the work vehicle 1 so that the work vehicle 1 travels in the downward direction during the return operation. This makes it possible to suppress the load applied to the work vehicle 1 during the return operation in connection with the gravity. The inclination direction can be detected by, for example, the inertial measurement unit of the sensor 66.

Furthermore, it is preferable that the return item is designated based on a cause that made the work vehicle 1 deviate from the travel route. As an example, in a case where the route deviation occurs due to the fact that the work vehicle 1 travels through a local obstacle point such as a "mud" or a "step" (including a depression), the movement direction as the return item of the work vehicle 1 during the return operation is designated as "forward". In short, in a case where the obstacle point exists on the travel route (target route R10), if the work vehicle 1 moves "backward" to return onto the travel route, the work vehicle 1 has to pass through the obstacle point again. However, if the work vehicle 1 moves "forward" during the return operation, it is possible to avoid the obstacle point. As a result, it becomes easy to return the work vehicle 1 onto the travel route.

Here, it can be estimated that the cause of the route deviation is "mud" on the basis of the fact that a stuck ratio and a slip ratio are equal to or greater than a threshold value, for example. The stuck ratio is calculated by dividing a difference between the vehicle speed and the driving speed of the crawlers 111L and 111R by the vehicle speed. The slip ratio is calculated by dividing the difference between the driving speed of the crawlers 111L and 111R and the vehicle speed by the driving speed of the crawlers 111L and 111R. Furthermore, it can be estimated that the cause of the route deviation is "step" on the basis of the fact that at least one of a pitch angle and a roll angle of the machine body 10 changes by a threshold value or more within a predetermined time, for example.

In addition, the return position on the travel route includes a position traveled by the work vehicle 1. That is, it is possible to cause the work vehicle 1 to return to the position traveled by the work vehicle 1 on the travel route (target route R10). This makes it possible to cause the work vehicle 1 to restart autonomously traveling after the work vehicle 1 returns to a state before the route deviation.

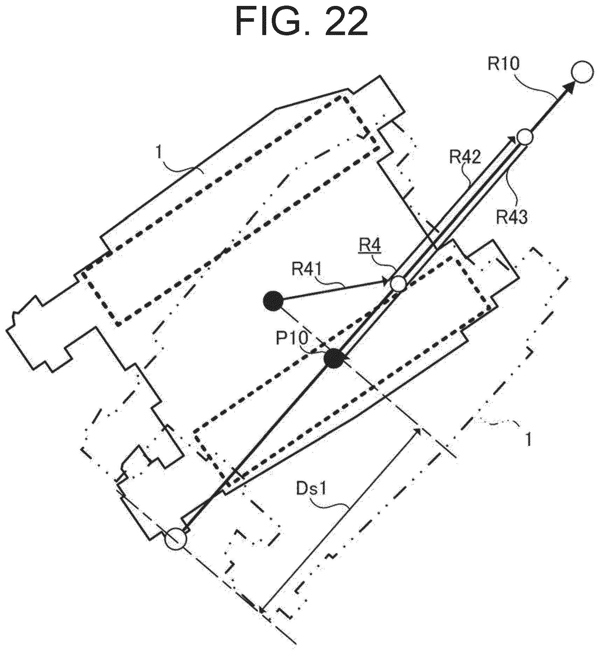

In the present embodiment, in particular, the return position is a position where the work vehicle 1 interrupts work. That is, for example, referring to FIG. 22 which shows a position where the work vehicle 1 interrupts work due to the route deviation as the work completion position P10, the work vehicle 1 travels forward on the first return route R41 and the second return route R42 to return onto the travel route (target route R10), and then travels backward on the target route R10 along the third return route R43 to the work completion position P10. The return of the work vehicle 1 to the work completion position P10 is determined based on whether or not a distance from a start point of a current segment to the current position of the work vehicle 1 reaches a start distance Ds1 from the start point of the current segment to the work completion position P10.

In this way, by causing the work vehicle 1 to return to the position where the work vehicle 1 interrupts work, it is possible to restart work from the position where the work vehicle 1 interrupts work when restarting autonomously traveling, thereby reducing the unevenness of work. However, whether or not to cause the work vehicle 1 to return to the work completion position P10 may be selectable by, for example, the operation by the user. In the example shown in FIG. 22, in a case where not to cause the work vehicle 1 to return to the work completion position P10, the work vehicle 1 travels forward on the first return route R41 and the second return route R42 to return onto the travel route (target route R10), and then the work vehicle 1 restarts autonomously traveling from that position.

Furthermore, when the road surface condition at or in the vicinity of the work completion position P10 is bad, the work vehicle 1 may not be caused to return to the work completion position P10. That is, in a case where a local obstacle point such as a "mud" or a "step" (including a recess) is present at or in the vicinity of the work completion position P10, there is a high possibility that the route deviation occurs again by causing the work vehicle 1 to return to the work completion position P10. In order to avoid such a circumstance, the work vehicle 1 may not return to the work completion position P10, but may restart autonomously traveling from the position where the work vehicle 1 returns onto the travel route (target route R10).

Meanwhile, the restart processor 76 determines whether or not the return of the work vehicle 1 can be performed by any one of return methods, and if it is determined that the return of the work vehicle 1 cannot be performed by one method, the return of the work vehicle 1 is performed by another return method. That is, the restart processor 76 can propose a plurality of return methods by employing the plurality of return routes and/or return items (at least one of the movement direction and the return position of the work vehicle 1) different from each other. The restart processor 76 determines whether or not the return of the work vehicle 1 can be performed in a priority descending order of the plurality of restart methods. Then, when it is determined that the return of the work vehicle 1 cannot be performed by the return method, the return of the work vehicle 1 is performed by the next return method.

For example, there is a case where when the return operation is performed by the return method in which the movement direction of the work vehicle 1 is designated as "forward" according to the movement direction shown in FIG. 20, the work vehicle 1 may be prevented from returning to the travel route due to the presence of a local obstacle point such as "mud" or "step" (including a depression) on the return route R4 or due to a steep inclination. In such a case, for example, by performing the return operation by another return method in which the movement direction of the work vehicle 1 in the return operation is changed to the "backward", it is consequently possible to cause the work vehicle 1 to return onto the travel route earlier and reliably.

Here, it is preferable that when the return of the work vehicle 1 by one return method fails the predetermined number of times, it is determined that the return of the work vehicle 1 by the one return method is impossible. Here, the term referred to as "predetermined number of times" is an arbitrary number of times equal to or more than one. In the present embodiment, the predetermined number of times is two or more (a plurality of times). Specifically, when the return of the work vehicle 1 fails after performing the return operation, a count of the return operation is incremented. When the number of counts reaches a predetermined number, the return method is switched to a return method at the time when it is determined that the return operation cannot be performed. The number of counts is reset when the work vehicle 1 returns onto the travel route or when the return method is changed.

As a result, after the return operation by one return method is retried a plurality of times, if the return operation cannot be performed, the return operation is performed by the next return method. Furthermore, although the vehicle can return to the travel route, if the work vehicle 1 deviates from the travel route again within a predetermined range from a point where the work vehicle 1 deviates from the travel route last time and the returning method is the same as a previous one, the counter is incremented similarly to the case where the work vehicle 1 cannot return to the travel route.

### 3.5 Route display screen

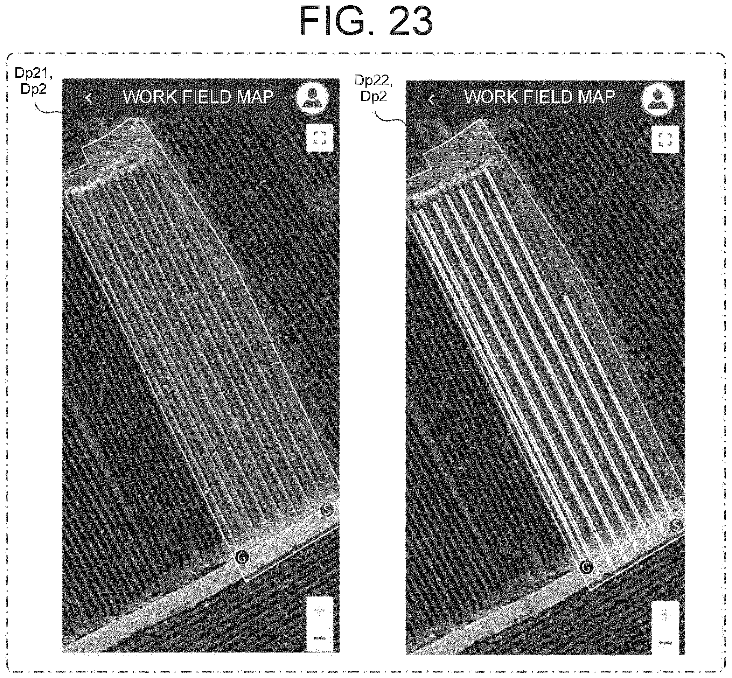

Next, the route display screen Dp2 displayed by the display processing unit 77 is described with reference to FIGS. 23 to 25.

The route display screen Dp2 is a screen which is displayed on, for example, the display unit 211 of the first operation terminal 210 or the display unit 611 of the user interface 61 by the display processing unit 77. The term referred to as "screen" such as the route display screen Dp2 in the present disclosure means a video (image) displayed on the display unit 211 or the like, and includes an image, a figure, a photograph, a text, a video, and the like. Here, in a case where the screen includes the video or the like, the screen includes not a still image but a moving image which changes every moment. In the drawings showing the route display screen Dp2 such as FIG. 23, leading lines and reference numerals are merely given for explanation, and are not actually displayed on the display unit 211 or the like. The design, arrangement, and size of the objects on the route display screen Dp2 described below are merely examples, and can be changed as appropriate.

That is, the travel control method according to the present embodiment further includes causing the display unit 211 (or 611) to display the route display screen Dp2 including the work route R1. The forward movement and the backward movement of the work vehicle 1 are displayed on the route display screen Dp2 at a display mode which is distinguished therebetween. In the present embodiment, as an example, the route display screen Dp2 can display the entire target route R10 (travel route) including not only the work route R1 but also the movement route R10.

FIG. 23 shows the route display screen Dp2 before the start of work (autonomous travel), and shows the route display screen Dp21 in the case of only forward travel and the route display screen Dp22 in the case of including forward and backward travel such as non-turning back-and-forth travel. The target route R10 is, in a superimposed manner, displayed on a map (including an aerial photograph or the like) of the field F1. As shown in FIG. 23, a route on which the work vehicle 1 travels forward and a route on which the work vehicle 1 travels backward are displayed in different colors on the display screens, for example. As an example, the route on which the work vehicle 1 travels forward is displayed in "gray", and the route on which the work vehicle 1 travels backward is displayed in "orange".

This allows the operator to grasp the movement of the work vehicle 1 in the entire work for the field F1 (before starting work), and in particular, to grasp whether the work vehicle 1 are moving forward or backward, by viewing the route display screen Dp2.

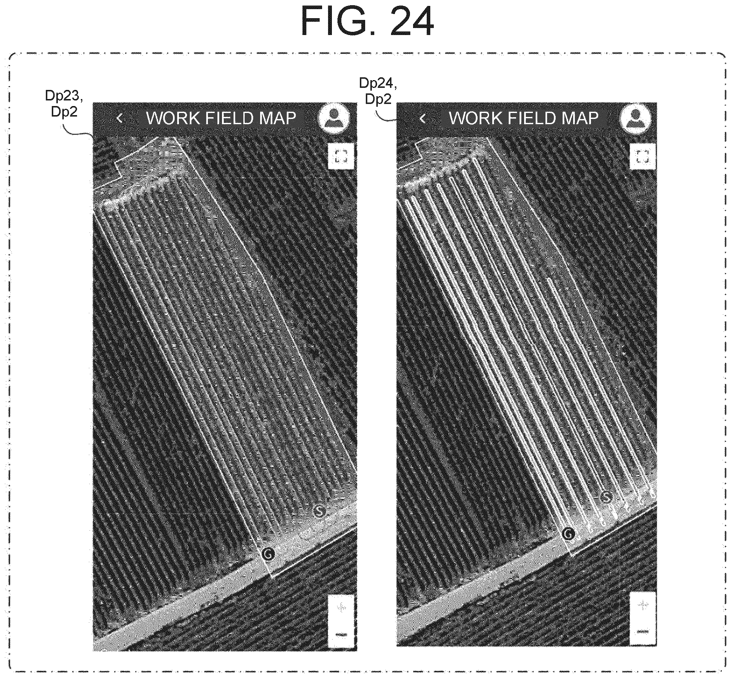

Furthermore, in the route display screen Dp2, the untraveled (unworked) target route R10 on which the work vehicle 1 does not travel and the traveled (worked) route (work history) on which the work vehicle 1 travels are displayed in different display modes. FIG. 24 shows a route display screen R10 in a case where the route deviation occurs in the middle of work (autonomous travel) and the work vehicle 1 restarts autonomously traveling from the middle of the target route R10. A route display screen Dp23 shows a case of only forward travel and a route display screen Dp24 shows a case of including the forward travel and the backward travel such the non-turning back-and forth travel. As shown in FIG. 24, the untraveled (unworked) target route R10 and the traveled (worked) route are displayed in different colors on the display screens, for example. As an example, a route on which the work vehicle 1 travels forward is displayed in "blue", and a route on which the work vehicle 1 travels backward is displayed in "green". In this way, it is visualized whether or not the work vehicle 1 travels on the target route R10 (work is performed).

Here, in a case where the work vehicle 1 interrupts work in the middle due to the route deviation or the like, it is preferable for the route display screen Dp2 to distinguish the work route R1 interrupted in the middle from other work routes R1. As an example, as shown in FIG. 24, the work route R1 interrupted in the middle is displayed in color such as "red" which is different color from the other work route R1. This makes it possible to grasp from where the work vehicle 1 should restart (start) next work, and to grasp the presence or absence of the work route R1 in which the work vehicle 1 interrupts work in the middle (that is, the work route R1 in which the work vehicle 1 should perform work again).

In the route display screen Dp2, it is also preferable that a position at which the work vehicle 1 stops autonomously traveling is displayed in an identifiable manner. For example, the operator can be notified of the position at which the work vehicle 1 stops by displaying the position at which the work vehicle 1 stops autonomously traveling using an icon or the like. As a result, it is possible to grasp at which position the work vehicle 1 stops often, thereby using as a reference for future planning such as soil improvement.

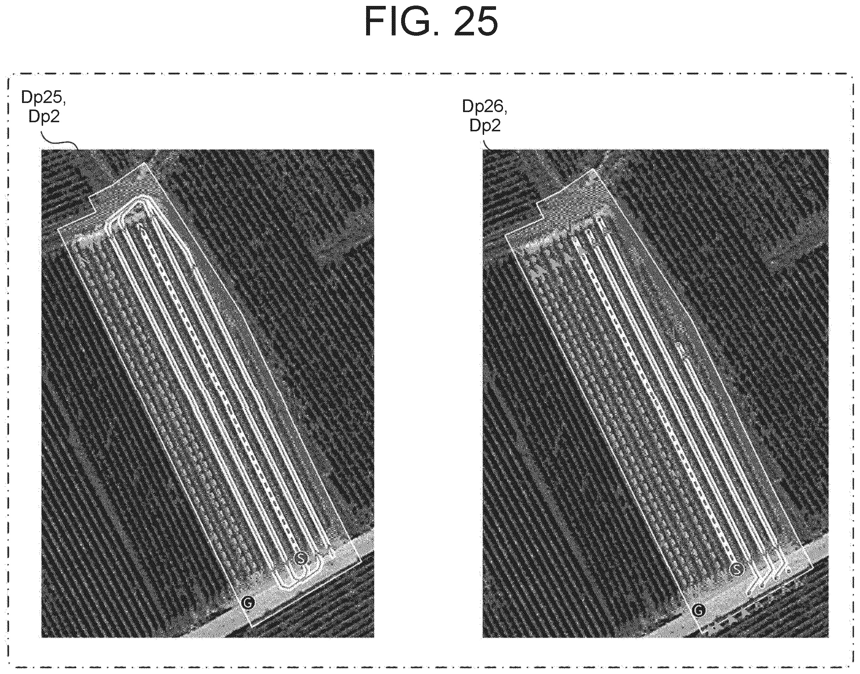

Furthermore, in addition to or instead of color on the display screens, for example, as shown in FIG. 25, the display modes of the travel route may be distinguished from each other by a line type (solid line/dashed line/one-dot chain line or the like) and a symbol (arrow/figure or the like). FIG. 25 shows a route display screen Dp2 in a case where the route deviation occurs in the middle of work (autonomous travel) and the work vehicle 1 restarts autonomously traveling from the middle of the target route R10. A route display screen Dp25 shows a case of only forward travel and a route display screen Dp26 shows a case of including the forward travel and the backward travel such the non-turning back-and forth travel. This makes it possible to easily distinguish the displayed travel routes from each other, even when it is difficult to distinguish the displayed travel routes from each other by color coding.

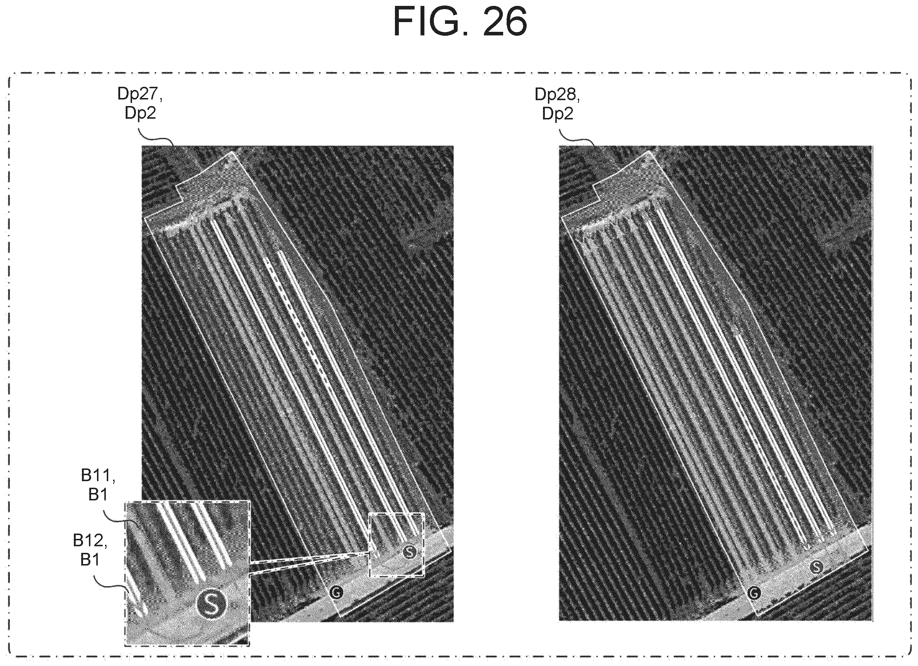

Furthermore, as shown in FIG. 26, a route on which the work vehicle 1 performs work (for example, spraying work) and a route on which the work vehicle 1 does not perform work may be displayed in a different mode on the display screen. FIG. 26 shows a route display screen Dp2 in the middle of work (autonomous travel). A route display screen Dp27 shows a case of only forward travel and a route display screen Dp28 shows a case of including the forward travel and the backward travel such the non-turning back-and forth travel. A partially enlarged view of the route display screen Dp27 is also shown in a balloon. In the example of FIG. 26, a white band B1 is, in a superimposed manner, displayed on a route on which the work vehicle 1 performs work, and the white band B1 is not, in a superimposed manner, displayed on a route on which the work vehicle does not perform work, so that the display modes of both routes are distinguished from each other. That is, for example, a route (non-work route) such as the movement route R2 on which the work vehicle 1 moves between the crop rows Vr1 without performing work is displayed in a different mode from a route on which the work vehicle 1 performs work while traveling, so that a range in which the work vehicle 1 performs work in the field F1 can be visually recognized. Also in the work route R1, an area in which the work vehicle 1 does not perform work is displayed in a display mode of a route where the work vehicle 1 does not perform work.

Furthermore, in FIG. 26, for example, the untraveled (unworked) route on which the work vehicle 1 does not perform work and the traveled (worked) route on which the work vehicle 1 performs work are displayed in a different light transmission rate (depth of white, color of display, or the like) of the white band B1. Specifically, a white band B11 is, in a superimposed manner, displayed on an untraveled area of the route on which the work vehicle 1 performs work, and a white band B12 is, in a superimposed manner, displayed on the traveled area of the route on which the work vehicle 1 performs work, thereby distinguishing the display mode of the untraveled area from that of the traveled area. This makes it possible to visualize how much area of the travel routes the work vehicle 1 travels (performs work) among the routes on which the work vehicle performs work in the field F1, that is, the progress amount of work performed by the work vehicle 1.

### 4. Alternative Example

Next, alternative examples of the first embodiment are described below. The alternative examples described below can be combined and implemented as appropriate.

The controller 7 according to the present disclosure includes a computer system. The computer system includes as hardware one or more processors and one or more memories as a main component. The processor executes a program recorded in the memory of the computer system, so that a function as the controller 7 according to the present disclosure is realized. The program may be previously recorded in the memory of the computer system, may be provided through an electric communication network, or may be provided in a state of being recorded in a non-transitory recording medium which is readable by the computer system, such as a memory card, an optical disk, or a hard disk drive. Furthermore, some or all of the functional units included in the controller 7 may be configured by electronic circuits.

In addition, it is not an essential for a configuration of the controller 7 that at least a part of the functions of the controller 7 is integrated in one housing, and the elements of the controller 7 may be provided dispersedly in a plurality of housings. Conversely, in the controller 7, the functions dispersedly provided to the plurality of devices (for example, the controller 7 and the first operation terminal 210) may be integrated in one housing. Furthermore, at least a part of the functions of the controller 7 may be realized by a cloud (cloud computing) or the like.

The work vehicle 1 may be used for work in not only an orchard such as a grape orchard or an apple orchard but also the other fields F1 or work sites other than the fields F1. Furthermore, the spraying material sprayed by the work vehicle 1 is not limited to liquid chemical, and may be, for example, water, fertilizer, disinfectant, other liquids, powder, or the like. Similarly, the spray object to which the spraying material is sprayed is not limited to grape trees, and may be other crops or objects other than crops (including inorganic stuffs). Furthermore, the work vehicle 1 is not limited to an unmanned vehicle which is operated by the autonomous driving, and the work vehicle 1 may be configured to operate by an operation (including a remote operation) of a person (operator), and may be, for example, a riding-type vehicle (manned vehicle) on which the operator can ride. Also in this case, the antenna 21 and the like are provided on the work vehicle 1 in order to determine the current position of the work vehicle 1.

Furthermore, the support frame 3 may be merely attached to one end portion of the machine body 10 in the front-rear direction D3, or may be attached to the front of the machine body 10. **In** this case, the work machine 400 supported by the support frame 3 is also provided on not the rear side but the front side of the machine body 10.

Furthermore, the work machine 400 (the sprayer 401 or the weeder) may be merely mounted on the machine body 10 of the work vehicle 1, and is not necessarily supported by the support frame 3. That is, at least one of the sprayer 401 and the weeder may be directly supported by the machine body 10 without via the support frame 3.

In addition, a specific means for notification and presentation is not limited to a display on the display unit 211 of the first operation terminal 210, and may be a display on another display unit, sound, a transmission to an external terminal, another means, or a combination thereof.

Furthermore, the work vehicle 1 may include a pair of work machines 400 arranged side by side in the front-rear direction D3. This allows the work vehicle 1 to perform work in each of the pair of work machines 400 arranged side by side in the front-rear direction D3, so that a work performance can be improved as compared to a case where only one of the work machines 400 performs work. The work vehicle 1 may further include a rotary drive device which generates a rotational force for causing the support frame 3 to rotate about the rotation axis Ax1 with respect to the machine body 10.

Furthermore, the machine body 10 may merely include the first block 10L and the second block 10R arranged side by side in the right-left direction D2, and the first block 10L and the second block 10R may be reversed in the right-left direction. That is, the first block 10L equipped with the power source 63 and the like may be located on the right side, and the second block 10R provided with the user interface 61 and the like may be located on the left side.

Furthermore, the traveler 11 is not limited to a crawler-type traveling device and, for example, may be configured to include one or more wheels and travel by rotation of the wheels. Furthermore, the traveler 11 is not limited to the configuration which is driven by a hydraulic motor and may be configured to be driven by, for example, an electric motor.

Moreover, the sprayer 401 as the work machine 400 is not limited to the sprayer of an air assist type in the first embodiment, and may be, for example, a sprayer of an electrostatic spraying type or a combination of an air assist type and an electrostatic spraying type.

In addition, the power source 63 is not limited to an engine, and may include, for example, a motor (electric motor), or may be a hybrid power source including the engine and the motor.

Furthermore, the machine body 10 of the work vehicle 1 may not have a gate-like shape, and the entire machine body 10 may have a configuration so as to travel through a gap (work passage) between a pair of crop rows Vr1 adjacent to each other. In this case, the work vehicle 1 travels on each work passage without straddling the crop row Vr1. In this case, the sprayer 401 performs the spraying work by switching a spray pattern among a spray pattern in which the liquid chemical is sprayed to both sides in the right-left direction D2, a spray pattern in which the liquid chemical is sprayed to only the left side, and a spray pattern in which the liquid chemical is sprayed to only the right side.

### Appendices of Disclosure

An outline of the disclosure extracted from the above-described embodiment is described below as appendices. Each of configurations and each of processing functions described in the following appendices can be selected and combined as appropriate.

### Appendix 1

A travel control method for a work vehicle that causes the work vehicle to automatically travel along a work route, the travel control method comprising
causing the work vehicle to perform a non-turning back-and-forth travel in which after the work vehicle travels from a first end of the work route toward a second end of the work rote, the work vehicle reverses a traveling direction without changing an orientation of the work vehicle on the second end side of the work route and travels from the second end of the work route toward the first end of the work route.

### Appendix 2

The travel control method for a work vehicle according to appendix 1, wherein
the work vehicle performs work on a work target row including a plurality of work objects while autonomously traveling along the work target row.

### Appendix 3

The travel control method for a work vehicle according to appendix 2, wherein
the work vehicle performs work on the work target row while the work vehicle performs the non-turning back-and-forth travel on the work route along the work target row.

### Appendix 4

The travel control method for a work vehicle according to any one of appendices 1 to 3 further comprising:
causing the work vehicle to perform a turning back-and-forth travel in which after the work vehicle travels from the first end of the work route toward the second end of the work rote, the work vehicle turns on the second end side of the work route and travels from the second end of the work route toward the first end of the work route; and
selecting the non-turning back-and-forth travel or the turning back-and-forth travel for each work route.

### Appendix 5

The travel control method for a work vehicle according to appendix 4, wherein
the non-turning back-and-forth travel is selected for the work route in which it is difficult for the work vehicle to turn on the second end side of the work route.

### Appendix 6

The travel control method for a work vehicle according to any one of appendices 1 to 5, further comprising
designating the traveling direction of the work vehicles when the work vehicle exits from a first end side of the work route to a headland area in the non-turning back-and-forth travel.

### Appendix 7

The travel control method for a work vehicle according to appendix 6, wherein the traveling direction of the work vehicles is fixed to be forward when the work vehicle exits from the first end side of the work route to the headland area in the non-turning back-and-forth travel.

### Appendix 8

The travel control method for a work vehicle according to any one of appendices 1 to 7, wherein
the work vehicle performs work only when the work vehicle travels in a specific direction in the non-turning back-and-forth travel.

### Appendix 9

The travel control method for a work vehicle according to appendix 8, wherein
the specific direction is forward.

### Appendix 10

The travel control method for a work vehicle according to any one of appendices 1 to 9, wherein
in the non-turning back-and-forth travel, the work vehicle performs work on either a forward route in which the work vehicle travels from the first end of the work route toward the second end of the work route or a backward route in which the work vehicle travels from the second end of the work route toward the first end of the work route.

### Appendix 11

The travel control method for a work vehicle according to any one of appendices 1 to 10 further comprising
causing a display unit to display a route display screen which includes the work route,

wherein a forward travel of the work vehicle and a backward travel of the work vehicle are displayed in different modes in the route display screen.

### Appendix 12

A travel control method for a work vehicle that causes the work vehicle to automatically travel along a work route, the travel control method comprising
causing a display unit to display a route display screen which includes the work route,
wherein a forward travel of the work vehicle and a backward travel of the work vehicle are displayed in different modes in the route display screen.

### Appendix 13

A travel control program to cause one or more processors to execute a travel control method for a work vehicle according to any one of appendices 1 to 12.

### REFERENCE SIGNS LIST

1 Work vehicle
10 Machine body
11 Traveler
72 Travel processor
100 Travel control system
211, 611 Display unit
Dp2 Route display screen
F12 Non-work area (headland area)
P31, P41 First end
P32, P42 Second end
R1 Work route
R10 Target route
Ro13, Ro14 Forward route
Rr13, Rr14 Backward route
V1 Crop (work object)
Vr1 Crop row (work target row)

## Claims

1. A travel control method for a work vehicle that causes the work vehicle to automatically travel along a work route, the travel control method comprising
causing the work vehicle to perform a non-turning back-and-forth travel in which after the work vehicle travels from a first end of the work route toward a second end of the work rote, the work vehicle reverses a traveling direction without changing an orientation of the work vehicle on the second end side of the work route and travels from the second end of the work route toward the first end of the work route.

2. The travel control method for a work vehicle according to claim 1, wherein
the work vehicle performs work on a work target row including a plurality of work objects while autonomously traveling along the work target row.

3. The travel control method for a work vehicle according to claim 2, wherein
the work vehicle performs work on the work target row while the work vehicle performs the non-turning back-and-forth travel on the work route along the work target row.

4. The travel control method for a work vehicle according to any one of claims 1 to 3 further comprising:
causing the work vehicle to perform a turning back-and-forth travel in which after the work vehicle travels from the first end of the work route toward the second end of the work rote, the work vehicle turns on the second end side of the work route and travels from the second end of the work route toward the first end of the work route; and
selecting the non-turning back-and-forth travel or the turning back-and-forth travel for each work route.

5. The travel control method for a work vehicle according to claim 4, wherein
the non-turning back-and-forth travel is selected for the work route in which it is difficult for the work vehicle to turn on the second end side of the work route.

6. The travel control method for a work vehicle according to any one of claims 1 to 3, further comprising
designating the traveling direction of the work vehicles when the work vehicle exits from the first end side of the work route to a headland area in the non-turning back-and-forth travel.

7. The travel control method for a work vehicle according to claim 6, wherein the traveling direction of the work vehicles is fixed to be forward when the work vehicle exits from the first end side of the work route to the headland area in the non-turning back-and-forth travel.

8. The travel control method for a work vehicle according to any one of claims 1 to 3, wherein
the work vehicle performs work only when the work vehicle travels in a specific direction in the non-turning back-and-forth travel.

9. The travel control method for a work vehicle according to claim 8, wherein
the specific direction is forward.

10. The travel control method for a work vehicle according to any one of claims 1 to 3, wherein
in the non-turning back-and-forth travel, the work vehicle performs work on either a forward route in which the work vehicle travels from the first end of the work route toward the second end of the work route or a backward route in which the work vehicle travels from the second end of the work route toward the first end of the work route.

11. The travel control method for a work vehicle according to any one of claims 1 to 3 further comprising
causing a display unit to display a route display screen which includes the work route,
wherein a forward travel of the work vehicle and a backward travel of the work vehicle are displayed in different modes in the route display screen.

12. A travel control program to cause one or more processors to execute a travel control method for a work vehicle according to any one of claims 1 to 3.

13. A travel control system comprising a travel processor to cause a work vehicle to autonomously travel along a work route,
wherein the travel processor can perform a non-turning back-and-forth travel in which after the work vehicle travels from a first end of the work route toward a second end of the work rote, the work vehicle reverses a traveling direction without changing an orientation of the work vehicle on the second end side of the work route and travels from the second end of the work route toward the first end of the work route.

14. A work vehicle comprising:
a travel control system according to claim 13; and
a traveler that is controlled by the travel control system.
